# EUROPEAN PATENT SPECIFICATION

(11) **EP 4 521 188 B1**
(45) Date of publication and mention of the grant of the patent: **27.05.2026**
(21) Application number: 24188773.6
(22) Date of filing: 16.07.2024
(51) Int. Cl.: G05D 1/617, G05D 1/698, G05D 1/225, G05D 1/227, G05D 1/249, G05D 105/45, G05D 107/70, G05D 109/10, G05D 111/10

(54) **VEHICLE DETECTION APPARATUS, VEHICLE DETECTION METHOD, AND VEHICLE**
FAHRZEUGDETEKTIONSVORRICHTUNG, FAHRZEUGDETEKTIONSVERFAHREN UND FAHRZEUG
APPAREIL DE DÉTECTION DE VÉHICULE, PROCÉDÉ DE DÉTECTION DE VÉHICULE ET VÉHICULE

(30) Priority: 08.09.2023 JP 2023145729
(43) Date of publication of application: 12.03.2025
(73) Proprietor: TOYOTA JIDOSHA KABUSHIKI KAISHA, Aichi-ken, 471-8571 (JP)
(72) Inventor: INOUE, Go, Toyota-shi, 471-8571 (JP); IWAZAKI, Noritsugu, Toyota-shi, 471-8571 (JP); KANOU, Takeshi, Toyota-shi, 471-8571 (JP); YOKOYAMA, Daiki, Toyota-shi, 471-8571 (JP)
(74) Representative: J A Kemp LLP

(56) References cited:
- DE-A1- 102020 102 113
- JP-A- 2021 062 790
- US-A1- 2018 339 703

## Description

### BACKGROUND

The present disclosure relates to a vehicle detection apparatus and a vehicle.

For example, Japanese Patent Application Publication No. 2017-538619 discloses a technique that uses both a vehicle transport method using a belt and a transport method using running of a vehicle by remote control in a system for manufacturing vehicles.

However, the previously-known technique merely teaches a configuration in which the transport using running of a vehicle by remote control is performed after the transport of a vehicle using a belt, and nowhere teaches a configuration in which the transport of a vehicle using a belt is performed after the transport using running of a vehicle by remote control. If a vehicle is not disposed in an appropriate position in a transport device with a belt, the vehicle may be damaged during the transport by the transport device. DE 102020 1021 13 A1 discloses a method for assisted bonding of vehicle to moving transport device of vehicle cleaning system, an infotainment system and a vehicle.

### SUMMARY

The present disclosure may be realized by the following aspects.
(1) According to one embodiment of the present disclosure, a vehicle detection apparatus is provided. The vehicle detection apparatus comprises: a detection unit configured to detect, using at least one of state information indicating a state of a vehicle capable of running by unmanned driving obtained from a detector provided on the vehicle; an image of the vehicle; three-dimensional (3D) point cloud data of the vehicle; and position information of the vehicle, that at least one wheel provided in the vehicle departs from a transport unit of a transport device, and output a detection result, the transport unit being capable of transporting the vehicle.

The vehicle detection apparatus according to this aspect is capable of detecting whether the wheel has departed from the transport unit when the vehicle is disposed in the transport unit of the transport device. This enables detection as to whether the vehicle is appropriately disposed in the transport unit.

The vehicle detection apparatus according to the above aspect further comprises a command generation unit configured to generate, when departure of the wheel is detected, a control command to cause the departed wheel to be spinnable with a force smaller than a force before departure of the wheel is detected, and output the control command.

The vehicle detection apparatus allows the departed wheel to be rotatable, thereby suppressing or preventing the departed wheel from being damaged from contact objects other than the transport unit.

The vehicle detection apparatus according to the above aspect further comprises a wheel identification unit configured to identify which wheel is departed using the at least one information. The command generation unit generates and outputs a control command to cause only the departed wheel to be spinnable when departure of the wheel is detected.

The vehicle detection apparatus allows only the wheel that has departed to be spinnable, thereby suppressing or preventing the other wheels on the transport unit from rotating, thereby suppressing or preventing the vehicle from moving on the transport unit.

(3) The vehicle detection apparatus according to the above aspect the state in which the departed wheel is spinnable includes at least one of a state in which the departed wheel is spinnable because power from a motor of the vehicle is not transmitted to the departed wheel , and a state in which the departed wheel is spinnable because a braking force applied to the departed wheel is weakened to be smaller than a braking force applied to the wheel before the wheel is departed.

The vehicle detection apparatus according to this aspect is capable of switching the state of a vehicle with the departed wheel to a state transportable by the transport device by a simple method of switching the state of the vehicle.

(5) The vehicle detection apparatus according to the above aspect may further comprise a position estimation unit configured to estimate a position of the vehicle using vehicle information, the vehicle information being at least one of the image of the vehicle and the 3D point cloud data of the vehicle and acquired by a vehicle detector that acquires the vehicle information.

The vehicle detection apparatus according to this aspect is capable of improving the accuracy in the position estimation of the vehicle.

(6) The vehicle detection apparatus according to the above aspect may further comprise a command generation unit configured to generate and output a control command to move the vehicle to the transport unit using the position of the vehicle estimated by the position estimation unit when departure of the wheel is detected.

The vehicle detection apparatus according to this aspect is capable of restoring the state of a vehicle with the departed wheel departed to a normal state by a simple method of running the vehicle.

(7) The vehicle detection apparatus according to the above aspect may further comprise a wheel information acquisition unit configured to acquire wheel information indicating a state of the departed wheel using the acquired at least one information, and a transport instruction unit configured to output an instruction to stop transport by the transport device when the acquired state of the departed wheel satisfies a predetermined stopping condition.

The vehicle detection apparatus according to this aspect is capable of determining whether or not to transport the vehicle based on the state of the wheels, thereby more reliably preventing damages to the wheels and the drive system due to the transport by the transport device.
(8) The vehicle detection apparatus according to the above aspect the wheel information may include at least one of information regarding an orientation of the departed wheel with respect to a transport direction in which the transport device transports the vehicle, information regarding a distance from the transport unit to the departed wheel, and information regarding a height difference between the transport unit and the departed wheel.
(9) The vehicle detection apparatus according to the above aspect may further comprise a command generation unit configured to generate and output a control signal to activate at least one of a lamp or a horn provided in the vehicle when departure of the wheel is detected.

The vehicle detection apparatus according to this aspect is capable of giving notification to the surrounding area of the vehicle by a simple method using devices provided on the vehicle.

(10) According to another aspect of the present disclosure, a vehicle capable of running by unmanned driving is provided. The vehicle comprises at least one wheel and a vehicle detection apparatus according to any one of the above aspects.

The vehicle according to this aspect is capable of detecting whether or not the wheel has departed from the transport unit and whether or not the vehicle is properly disposed in the transport unit when the vehicle is disposed in the transport unit of the transport device. By enabling the wheel that is departed to be rotatable, the vehicle can suppress or prevent the wheel that is departed from being damaged from contact objects other than the transport unit.

The present disclosure may also be implemented in various aspects other than vehicle detection apparatus or vehicles. For example, the present disclosure may also be implemented in the form of a remote control system, a transport device, a transport system, a vehicle detection system, a vehicle transport method, a vehicle detection method, a transport device control method, a transport system control method, a vehicle detection system control method, a computer program for realizing these control methods, a non-transitory storage medium storing the computer program, and the like.

### BRIEF DESCRIPTION OF THE DRAWINGS

The objects described above, and other objects, features, and advantages in relation to the present disclosure will be clarified by the following detailed description with reference to the accompanying drawings.
Fig. 1 is an explanatory view showing a schematic structure of a transport system including a remote control system as a vehicle detection apparatus;
Fig. 2 is an explanatory view showing an internal functional structure of a vehicle;
Fig. 3 is a block diagram showing an internal functional structure of a transport control system;
Fig. 4 is a block diagram showing an internal functional structure of a remote control system according to a first embodiment;
Fig. 5A is a flowchart showing a vehicle running method achieved by the remote control system;
Fig. 5B is a flowchart showing a vehicle transport method according to the first embodiment;
Fig. 6 is a flowchart showing a process routine of a vehicle disposition confirmation process in a transport method according to the first embodiment;
Fig. 7 is an explanatory view showing an upper view of the vehicle disposed in a normal transport starting position;
Fig. 8 is an explanatory view showing an upper view of the vehicle departed from a transport unit;
Fig. 9 is an explanatory view showing a front view of the vehicle departed from the transport unit;
Fig. 10 is an explanatory view showing an upper view of the vehicle in a state where a stopping condition is not satisfied;
Fig. 11 is a flowchart showing a process routine of a vehicle disposition confirmation process in a transport method according to a second embodiment;
Fig. 12 is a block diagram showing a functional structure of a vehicle according to a third embodiment; and
Fig. 13 is a flowchart showing a vehicle running method according to the third embodiment.

### DETAILED DESCRIPTION

### A. First Embodiment

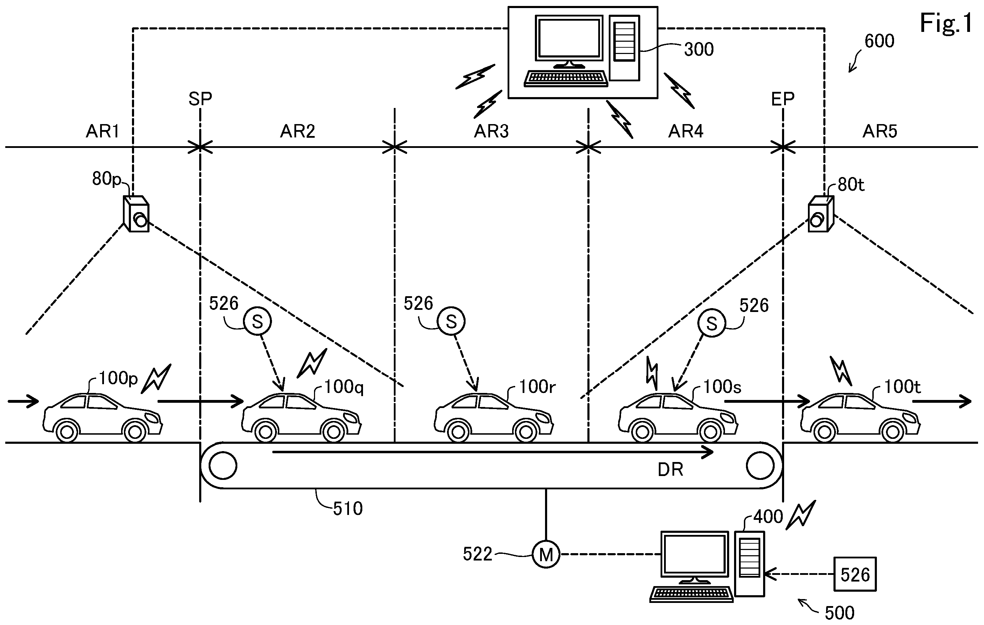

Fig. 1 is an explanatory view showing a schematic structure of a transport system 600 including a remote control system 300 as a vehicle detection apparatus according to a first embodiment of the present disclosure. The transport system 600 is used, for example, in a factory where a vehicle 100 is produced. The target to be transported by the transport system 600 is a vehicle 100 capable of running by remote control. The transport system 600 is used in the process of producing the vehicle 100, such as the inspection process or the assembly process of the vehicle 100, and transports the vehicle 100 across a predetermined transport section in the production process. The vehicles 100 being transported are subjected to inspection, assembly, and the like, by workers or equipment.

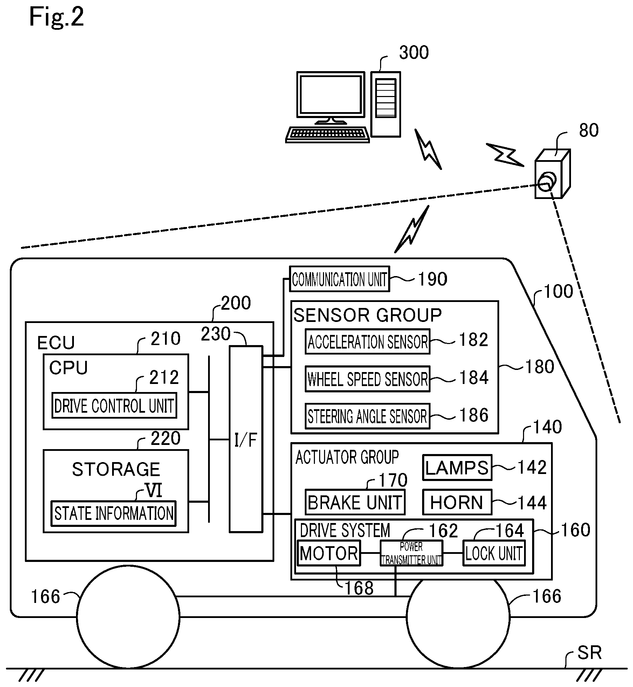

Fig. 2 is an explanatory view showing an internal functional structure of the vehicle 100. The vehicle 100 is, for example, a passenger car, a truck, a bus, a construction vehicle, or the like. In the present embodiment, the vehicle 100 is an electric vehicle (BEV: Battery Electric Vehicle) that can run by unmanned driving. The term "unmanned driving" refers to driving without driving operations by a passenger. The driving operation refers to an operation regarding at least one of "running", "turning", or "stopping" of a vehicle. The unmanned driving is achieved through automatic or manual remote control using a device provided outside the vehicle, or through autonomous control of the vehicle. The vehicle running by unmanned driving may have a passenger who does not perform a driving operation. Examples of the passenger who does not perform a driving operation include those who are simply sitting in the vehicle seats, those who are performing tasks other than driving operation, such as assembly, inspection, operations of switches, and the like, while being in the vehicle. The driving through a driving operation by a passenger may be referred to as "manned driving". The vehicle 100 is equipped with a vehicle communication unit 190, an actuator group 140, a sensor group 180, and an ECU (Electronic Control Unit) 200.

The ECU 200 is mounted on the vehicle 100 and performs various types of control of the vehicle 100. The ECU 200 is equipped with HDD (hard disk drive), SSD (solid state drive), an optical storage medium, a storage 220 such as a semiconductor memory or the like, a CPU 210 as the central processing unit, and an interface circuit 230. The CPU 210, the storage 220, and the interface circuit 230 are connected via an internal bus to enable bidirectional communication. The actuator group 140, the sensor group 180, and the vehicle communication unit 190 are connected to the interface circuit 230. The vehicle communication unit 190 performs wireless communication with devices outside the vehicle 100, such as the remote control system 300, connected to a network via an access point or the like in the factory.

A readable/writable region of the storage 220 stores state information VI. The "state information" refers to information indicating a state of the vehicle 100 that can be acquired from the sensor group 180 of the vehicle 100, and is, for example, the inclination of the vehicle 100, the state of rotation of wheels 166, and the like. The state information is used to detect the vehicle 100 departed from a transport unit 510, as described later.

The storage 220 stores a computer program to implement at least some functions provided in the present embodiment. As the CPU 210 executes various computer programs stored in the memory, the functions of a drive control unit 212 and the like are implemented.

The drive control unit 212 executes driving control of the vehicle 100. The "driving control" refers to various controls for driving the actuator group 140 that exhibits the "running," "turning," and "stopping" functions of the vehicle 100, such as adjustment of acceleration, speed, and steering angle. In the present embodiment, the actuator group 140 includes an actuator for a drive system 160 for accelerating the vehicle 100, an actuator for a brake unit 170 for decelerating the vehicle 100, and an actuator for a steering device (not shown) for changing the traveling direction of the vehicle 100.

The actuator group 140 may further include an actuator for turning on and off lamps 142 of the vehicle 100 and an actuator for sounding a horn 144 of the vehicle 100. The lamps 142 include various lamps whose lighting states can be seen from outside the vehicle 100, such as front lights, direction indicators, side lamp, brake lamp, and tail lamp. The lamps 142 may also include lamps provided inside the vehicle 100, such as room lights, insofar as they are visible from outside the vehicle 100. Further, the actuator group 140 may include an actuator for swinging wipers of the vehicle 100, an actuator for opening and closing power windows of the vehicle 100, and the like.

The actuator of the drive system 160 includes a driving battery (not shown), a driving electric motor 168 driven by the power of the driving battery, four wheels 166, a power transmission unit 162, and a lock unit 164. The driving electric motor 168 is an example of a motor. The wheels 166 are rotated by the power transmitted from the driving electric motor 168. Instead of the driving electric motor 168, other types of motors, such as internal or external combustion engines, may be provided.

The power transmission unit 162 includes transmission mechanisms, such as gears and shafts, and transmits the power from the driving electric motor 168 to the wheels 166. The lock unit 164 switches between a fixed state in which the transmission mechanisms of the power transmission unit 162 are locked, and a non-fixed state. In the present embodiment, the lock unit 164 is an electric parking brake (EPB) that can be operated by remote control. When the function of the power transmission unit 162 is switched to "P range", for example, by remote control of the remote control system 300 or by lever operation by the occupant of the vehicle 100, the lock unit 164 is switched to the fixed state, and the wheels 166 are locked and stop rotating. Further, when the function of the power transmission unit 162 is switched to "N range", the gears and the like in the transmission mechanisms of the power transmission unit 162 become disconnected, and the transmission of the power from the driving electric motor 168 to the wheels 166 stops. In the N range, the wheels 166 are spinnable. The term "spin" refers to a state in which the wheels 166 are allowed to rotate without causing a move. When the wheels 166 spin, even though the wheels 166 are rotated, the vehicle 100 does not move by the distance corresponding to the amount of the rotation of the wheels 166. A "D range" refers to a state in which the lock unit 164 is in a non-fixed state and the gears and the like of the transmission mechanisms of the power transmission unit 162 are connected. In the D range, the power transmission unit 162 transmits the power from the driving electric motor 168 to the wheels 166, making the vehicle 100 to be capable of running.

When the vehicle 100 has a driver, the drive control unit 212 causes the vehicle 100 to run by controlling the actuator group 140 in response to the operation by the driver. Further, the drive control unit 212 is capable of causing the vehicle 100 to run by controlling the actuator group 140 in response to control commands transmitted from the remote control system 300, regardless of whether or not the vehicle 100 has a driver.

The sensor group 180 is a group of usual sensors used for driving control of the vehicle 100. The sensor group 180 includes, for example, an acceleration sensor 182 that detects impacts and the like on the vehicle 100, a wheel speed sensor 184 that measures the rotation speed of the wheels 166, and a steering angle sensor 186 that measures the steering angle of each wheel 166. The term "steering angle" herein refers to an average steering angle of the two front wheels of the vehicle 100. Further, the acceleration sensor 182 can also detect inclination of the vehicle 100 relative to a horizontal plane or the like. The measurement results of the sensor group 180 are transmitted to the ECU 200.

As shown in Fig. 1, the transport system 600 includes a vehicle detector 80, a transport device 500, and the remote control system 300. Fig. 1 shows vehicle detectors 80p and 80t, which are examples of the vehicle detector 80. The vehicle detector 80 is a device for measuring vehicle information. The "vehicle information" refers to information used for estimation of at least one of the position of the vehicle 100 and the orientation of the vehicle 100, such as images of the vehicle 100 or three-dimensional (3D) point cloud data of the vehicle 100. The "3D point cloud data" is data indicating the 3D position of a point cloud. In the present embodiment, a LiDAR (Light Detection And Ranging), which is a distance measuring device, is used as the vehicle detector 80. The vehicle detector 80 measures the 3D point cloud data of the vehicle 100 as vehicle information. By using a LiDAR, highly accurate 3D point cloud data can be acquired. The distance measuring devices other than LiDAR, such as a millimeter wave radar, may be used as the distance measuring device.

The vehicle detector 80 is communicatively connected to the remote control system 300 by wireless or wired communication. By acquiring the vehicle information from the vehicle detector 80, the remote control system 300 can acquire the position and orientation of the vehicle 100 relative to the target route in real time.

The transport device 500 includes an electric motor 522, the transport unit 510, a plurality of transport position detectors 526, and a transport control system 400. The electric motor 522 is controlled by the transport control system 400 to drive the transport unit 510.

The transport unit 510 transports the vehicle 100 to be transported toward a transport direction DR. In the present embodiment, the transport unit 510 is a belt conveyor with an annular endless belt, and transports the vehicle 100 placed on the endless belt. The vehicle 100 on the transport unit 510 can be released from the transport unit 510 at an arbitrary timing by remote control of the remote control system 300. In the present embodiment, the transport unit 510 is continuously driven regardless of whether or not the vehicle 100 is present on the transport unit 510. The transport unit 510 allows the vehicle 100 to move across a predetermined transport section without remote control or driving control of the vehicle 100. The transport unit 510 is not limited to the belt conveyor, but may also be a roller conveyor, a chain conveyor, or various other conveyors capable of transporting the vehicle 100. The transport unit 510 is not limited to those continuously driven, but may also be configured to be driven only when the vehicle 100 is placed on the transport unit 510. The transport unit 510 is not limited to those that transport only the vehicles 100, but may also transport, for example, workers who perform processes on the vehicles 100, parts of the vehicles 100, and the like, together with the vehicles 100.

The transport position detector 526 is a detector of various kinds capable of detecting the presence or absence of target objects, such as an infrared sensor, an ultrasonic sensor, a millimeter wave radar, or the like. The transport position detector 526 detects the vehicle 100 on the transport unit 510. In the present embodiment, there is a plurality of transport position detectors 526, and a plurality of transport position acquisition units 324 are installed at each predetermined transport section in the transport device 500. This allows detection of the presence or absence of the vehicle 100 for each transport section, in other words, the position of the vehicle 100 in the transport section. The information regarding the position of the vehicle 100 detected by the transport position detector 526 and an off-transport detection unit 528, which is described later, is also referred to as "position information". The detection result of the transport position detector 526 is output to the transport control system 400.

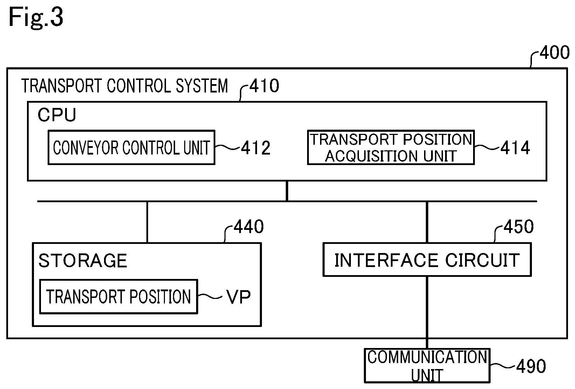

Fig. 3 is a block diagram showing an internal functional structure of the transport control system 400. The transport control system 400 includes a CPU 410 as the central processing unit, a storage 440, an interface circuit 450, and a transport communication unit 490. The CPU 410, the storage 440, and the interface circuit 450 are connected via an internal bus to enable bidirectional communication. The interface circuit 450 is connected to the transport communication unit 490. The transport communication unit 490 communicates with the remote control system 300 and the vehicle 100 via a network or the like.

The storage 440 is, for example, RAM, ROM, HDD, SSD, or the like. A readable/writable region of the storage 440 stores a transport position VP detected by the transport position detector 526. Further, the storage 440 stores a program to implement at least some functions provided in the present embodiment. As the CPU 410 executes the program, a conveyor control unit 412 and a transport position acquisition unit 414 become functional. The conveyor control unit 412 drives the electric motor 522 to control on/off of the transport unit 510 and the transport speed of the transport unit 510.

The transport position acquisition unit 414 acquires the transport position of the vehicle 100 from the transport position detector 526, and stores the acquired transport position as the transport position VP in the storage 440. The position of the vehicle 100 in the transport section may be acquired using the vehicle detector 80. The transport position detector 526 may be omitted, for example, when the transport position of the vehicle 100 is detected by the vehicle detector 80.

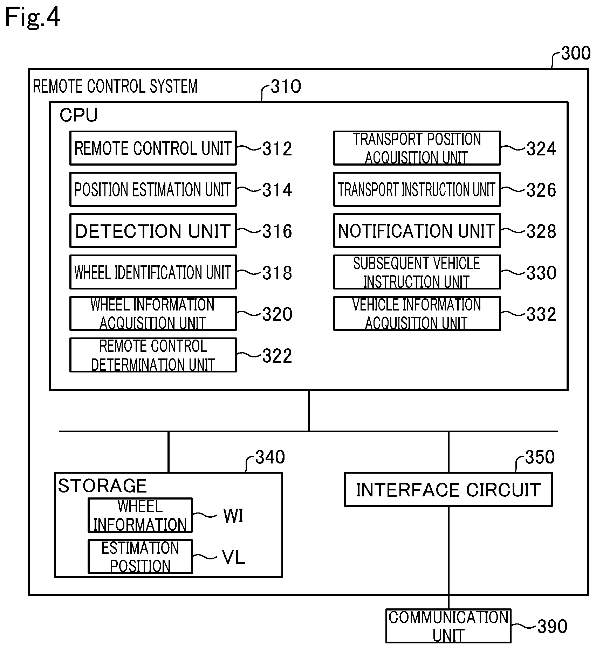

Fig. 4 is a block diagram showing an internal functional structure of the remote control system 300 according to the first embodiment. The remote control system 300 generates control commands for enabling automatic running of the vehicle 100 by remote control, and transmits the control commands to the vehicle 100, thereby performing driving control of the vehicle 100 by remote control. The remote control system 300 performs, for example, transport of the vehicle 100 in the transport section in the factory, for example, by performing automatic running of the vehicle 100 by remote control. Further, in the present embodiment, as described later, the remote control system 300 also functions as a vehicle detection apparatus that detects that at least one wheel 166 provided in the vehicle 100 has departed of the transport unit 510 of the transport device 500.

The remote control system 300 includes a CPU 310 as the central processing unit, a storage 340, an interface circuit 350, and a remote communication unit 390. The CPU 310, the storage 340, and the interface circuit 350 are connected via an internal bus to enable bidirectional communication. The remote communication unit 390 is connected to the interface circuit 350. The remote communication unit 390 communicates with the vehicle 100 and the transport control system 400 via a network or the like.

The storage 340 is, for example, RAM, ROM, HDD, SSD, or the like. A readable/writable region of the storage 340 stores wheel information WI and an estimation position VL. Further, the storage 340 stores a computer program to implement at least some functions provided in the present embodiment. In response to the execution of the computer program stored in the storage 340 by the CPU 310, the CPU 310 functions as a remote control unit 312, a position estimation unit 314, a detection unit 316, a wheel identification unit 318, a wheel information acquisition unit 320, a remote control determination unit 322, a transport position acquisition unit 324, a transport instruction unit 326, a notification unit 328, a subsequent vehicle instruction unit 330, and a vehicle information acquisition unit 332. However, some or all of these functions may be configured by hardware circuits.

The position estimation unit 314 acquires the vehicle information from the vehicle detector 80, and estimates the position and the orientation of the vehicle 100 using the acquired vehicle information. In the present embodiment, the position estimation unit 314 uses 3D point cloud data measured by the vehicle detector 80 as the vehicle information. The position estimation unit 314 estimates the position and the orientation of the vehicle 100 in the acquired 3D point cloud data. Specifically, the position estimation unit 314 performs template matching on the 3D point cloud data using the vehicle point cloud data stored in the storage 340 in advance. Therefore, the position and the orientation of the vehicle 100 in the 3D point cloud data can be estimated with high accuracy. The estimated position and the orientation of the vehicle 100 are stored in the storage 340 as the estimation position VL. For example, 3D CAD data of the vehicle 100 can be used for the vehicle point cloud data as a template. The vehicle point cloud data contains information for specifying the orientation of the vehicle 100. For example, Iterative Closest Point (ICP) algorithm or Normal Distribution Transform (NDT) algorithm can be used for template matching of the vehicle point cloud data with respect to 3D point cloud data. It is not necessary to perform the template matching if, for example, the position of the vehicle 100 can be estimated with high accuracy from the 3D point cloud data.

The remote control unit 312 functions as a command generation unit that generates control commands to cause the vehicle 100 to perform various operations and outputs the control commands to the vehicle 100. For example, the remote control unit 312 generates a control command for enabling automatic running of the vehicle 100 by remote control using the estimated position and the orientation of the vehicle 100, i.e., the estimation position VL, and transmits the control command to the vehicle 100. This control command is, for example, a command to cause the vehicle 100 to run according to a target route stored in the storage 340. The control command can be generated as a command that includes a driving or braking force and a steering angle. When the vehicle 100 receives the request for remote control, the drive control unit 212 of the ECU 200 performs driving control, thereby enabling automatic running of the vehicle 100. In the present embodiment, the remote control unit 312 can also generate a control command to drive the actuator group 140, such as the lamp 142 or the horn 144, that does not directly contribute to the driving control of the vehicle 100.

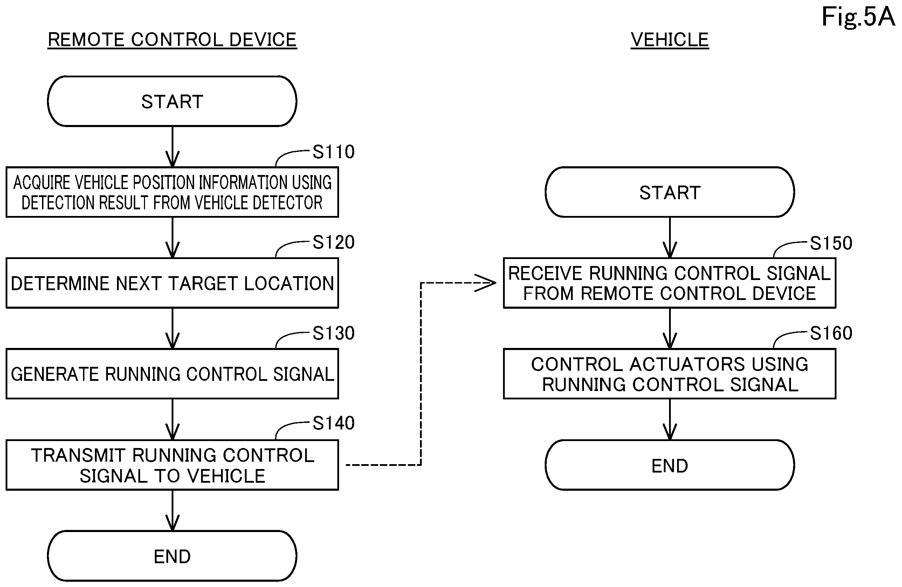

Fig. 5A is a flowchart showing a running method of the vehicle 100 achieved by the remote control system 300. The remote control unit 312 acquires results of estimation of the position and the orientation of the vehicle 100 by the position estimation unit 314 (step S110). In the present embodiment, the position of the vehicle 100 includes X, Y, Z coordinates in the global coordinate system of the factory. The position of the vehicle detector 80 is adjusted in advance. The remote control unit 312 detects the position of the vehicle 100 from the vehicle information acquired from the vehicle detector 80, and acquires the position of the vehicle 100 in the factory from the detected position of the vehicle 100.

The remote control unit 312 determines the target location where the vehicle 100 is supposed to go next (step S120). In the present embodiment, the target location is expressed in the form of X, Y, Z coordinates in the global coordinate system of the factory. The storage 340 of the remote control system 300 stores in advance a reference route where the vehicle 100 is supposed to run. The route is represented by a node indicating the departure point, a node indicating the transit point, a node indicating the destination, and a link connecting these nodes. The remote control unit 312 determines the target location to which the vehicle 100 is supposed to go next using the position of the vehicle 100 and the reference route. The remote control unit 312 determines the target location on the reference route ahead of the current location of the vehicle 100.

The remote control unit 312 generates a running control signal to cause the vehicle 100 to run toward the determined target location (step S130). In the present embodiment, the running control signal includes the acceleration and the steering angle of the vehicle 100 as parameters. The remote control unit 312 calculates the running speed of the vehicle 100 based on the positional transition of the vehicle 100 and compares the calculated running speed with a predetermined target speed of the vehicle 100. When the running speed is lower than the target speed, the remote control unit 312 determines the acceleration so that the vehicle 100 increases its speed, and when the running speed is higher than the target speed, the remote control unit 312 determines the acceleration so that the vehicle 100 decreases its speed. When the vehicle 100 is located on the reference route, the remote control unit 312 determines the steering angle so that the vehicle 100 does not deviate from the reference route. When the vehicle 100 is not located on the reference route, in other words, when the vehicle 100 deviates from the reference route, the remote control unit 312 determines the steering angle so that the vehicle 100 returns onto the reference route.

The remote control unit 312 transmits the generated running control signal to the vehicle 100 (step S140). The remote control unit 312 repeats the acquisition of the position of the vehicle 100, the determination of the target location, the generation of the running control signal, the transmission of the running control signal, and the like, in a predetermined cycle.

The drive control unit 212 of the vehicle 100 receives the running control signal from the remote control unit 312 (step S150), and controls the actuator group 140 using the received running control signal, thereby allowing the vehicle 100 to run at the acceleration and the steering angle indicated by the running control signal (step S160). The drive control unit 212 repeats the reception of the running control signal and the control of the actuator group 140 in a predetermined cycle. As described above, causing the vehicle 100 to run by remote control allows the vehicle 100 to move without using transport equipment, such as a crane, a conveyor, or the like.

The detection unit 316 detects the wheel 166 departed from the transport unit 510 of the transport device 500. The state where the wheel 166 is departed from the transport unit 510 may also be referred to as a "wheel runs off the unit". The wheel 166 departed from the transport unit 510 can be detected using the position information of the vehicle 100, the 3D point cloud data of the vehicle 100, and the state information VI. For example, if the detection results of the vehicle detector 80, such as the 3D point cloud data of the vehicle 100 or images of the vehicle 100, are used as the vehicle information, it is possible to detect whether the vehicle 100 is departed from the transport unit 510 by detecting the relative position of the vehicle 100 with respect to the transport unit 510. Further, when the state information VI is used, it is possible to detect that the vehicle 100 is departed from the transport unit 510 using, for example, the inclination of the vehicle 100 relative to the horizontal plane acquired from the acceleration sensor 182 or the rotation of the wheel 166 detected by the wheel speed sensor 184. The detection results of the detection unit 316 are output to the remote control unit 312 and the wheel identification unit 318. The detection results of the detection unit 316 may be output to a display device or the like, such as a display connected to the transport control system 400 or the remote control system 300.

The wheel identification unit 318 specifies which of the four wheels 166 provided in the vehicle 100 is departed. In the present embodiment, the wheel identification unit 318 analyzes the estimation position VL stored in the storage 340 to specify the region of the vehicle 100 that departs from the transport unit 510, and identifies the wheel 166 that is included in that region as the wheel 166 that is departed. The wheel identification unit 318 is not limited to those that identify only a single wheel 166, but may identify a plurality of wheels 166. Further, for example, the wheel identification unit 318 may identify which of the wheels 166 has departed using a predetermined range that includes the wheel 166 that has departed; examples of the range include a driving wheel, front wheel, rear wheel, right side in the width direction, left side in the width direction, or the like.

The wheel identification unit 318 may specify which wheel 166 is departed not only by using the position information, the estimation position VL, and the vehicle information, but also by acquiring the state information VI from the vehicle 100 and using the acquired state information VI. As an example of using the state information VI, it is possible to identify a wheel 166 at a lower position than the other wheels 166 as the wheel 166 that is departed using the inclination of the vehicle 100 detected by the acceleration sensor 182. Further, in the case where the vehicle 100 is transported with the wheels 166 not rotating on the transport unit 510, the rotation of the wheels 166 detected by the wheel speed sensor 184 can be used. For example, by acquiring a wheel 166 that is rotating or about to rotate from the wheel speed sensor 184, it is possible to estimate that the identified wheel 166 is in contact with the road surface or the like outside the transport unit 510, thus departed from the transport unit 510. If only whether or not the vehicle 100 is departed from the transport unit is detected without specifying the wheel 166 that is departed, the wheel identification unit 318 may be omitted. Further, the wheel identification unit 318 may also specify which wheel 166 is departed using any combination of the position information, the estimation position VL, the vehicle information, and the state information VI.

The wheel information acquisition unit 320 acquires the wheel information WI using at least one of the acquired position information of the vehicle 100, the vehicle information or the estimation position VL, and the state information VI acquired from the vehicle 100. The "wheel information" is information indicating the state of the wheel 166 that has departed. The "state of the wheel 166 that has been departed" includes, for example, at least one of the orientation of the wheel 166 relative to the transport direction DR of the vehicle 100 transported by the transport device 500, the distance between the wheel 166 that has been departed and the transport unit 510, and the height difference between the wheel 166 that has been departed and the transport unit 510. The wheel information acquisition unit 320 stores the acquired wheel information WI in the storage 340.

The remote control determination unit 322 determines whether to stop or start the remote control. Specifically, the remote control determination unit 322 determines whether to stop or start the remote control based on whether or not the transport position of the vehicle 100 has reached the transport starting position or the transport ending position of the vehicle 100 in the transport section of the transport device 500. The remote control determination unit 322 determines to stop the remote control when the vehicle 100 has reached the transport starting position on the transport unit 510 and becomes ready to be transported by the transport device 500. The action of "stopping remote control" includes, for example, stopping the remote control unit 312 from generating control commands to perform remote control of the vehicle 100 and stopping the transmission of the control commands generated in the remote control system 300 to the vehicle 100. By stopping the remote control while the vehicle 100 is being transported by the transport device 500, it is possible to reduce, for example, power consumption of the remote control system 300 or other devices than the remote control system 300. Alternative embodiments of stopping the remote control include turning off the power source or communication functions of the remote control system 300 and turning off the power source or communication functions of the vehicle 100. If the remote control of the vehicle 100 is not stopped while the vehicle 100 is being transported by the transport device 500, the remote control determination unit 322 may be omitted.

The "transport starting position" is a position in the transport section of the transport by the transport device 500 and is a position where the transport of the vehicle 100 is started by the transport device 500. The "transport ending position" is a position in the transport section of the transport by the transport device 500 and is a position where the transport of the vehicle 100 is ended by the transport device 500. The "transport position" is the position of the vehicle 100 in the transport section of the transport by the transport device 500. The transport position may include information indicating whether or not the vehicle 100 is departed from the transport unit 510. The transport position may be the position of the entire vehicle 100 or a position of a part of the vehicle 100. The "position of the entire vehicle 100" may be, for example, the position of each end of the vehicle 100 in the length-wise, width-wise, and height-wise directions, a representative position of the vehicle 100, such as the center of gravity of the vehicle 100, or a set of positions of the respective parts of the vehicle 100.

The transport position acquisition unit 324 acquires the transport position of the vehicle 100 being transported by the transport device 500. The transport position acquisition unit 324 acquires the transport position VP stored in the storage 440 from the transport control system 400, or acquires the transport position from the vehicle detector 80 if the position of the vehicle 100 on the transport unit 510 can be acquired by the vehicle detector 80. The transport position acquisition unit 324 may acquire the vehicle position directly from the transport position detector 526.

The transport instruction unit 326 outputs to the transport control system 400 instructions regarding the transport of the vehicle 100 by the transport device 500, such as stopping and starting of the transport, switching the transport speed, and the like. The transport instruction unit 326 outputs an instruction to stop the transport of the vehicle 100 by the transport device 500 when, for example, an abnormality in the transport of the vehicle 100 by the transport device 500 is detected.

The notification unit 328 provides notification, for example, when an abnormality in the transport of the vehicle 100 by the transport device 500 is detected. The subsequent vehicle instruction unit 330 outputs an instruction to delay the timing of arrival of a subsequent vehicle to the transport device 500, for example, when an abnormality in the transport of the vehicle 100 by the transport device 500 is detected. A "subsequent vehicle" is a vehicle scheduled to be transported by the transport device 500 following the vehicle 100, or at any timing later than that.

The vehicle information acquisition unit 332 acquires vehicle identification information of the vehicle 100 to be transported by the transport device 500 from a production management device or the like. The "vehicle identification information" refers to various types of information that enables individual identification of each vehicle 100. The vehicle identification information includes, for example, ID information given to each vehicle 100, such as a vehicle identification number (VIN), the serial number of the vehicle 100 used for production control, and the like. The vehicle identification information is used to verify whether or not the vehicle 100 is a target vehicle for the transport by the transport device 500. The vehicle identification information can be acquired, for example, from radio frequency-identification (RF-ID) tags attached to the vehicle 100 via short-range wireless communication or the like. The vehicle identification information may be acquired by reading a two-dimensional code attached to the vehicle 100 with a camera or the like.

The transport method of the vehicle 100 is described below with reference to Fig. 1. Fig. 1 schematically shows the transport section of the vehicle 100 from a range AR1 to a range AR5. Fig. 1 shows vehicles 100p, 100q, 100r, 100s, 100t, which are examples of the vehicle 100, and the vehicle detectors 80p and 80t, which are examples of the vehicle detector 80. The ranges AR1 and AR5 are transport sections based on automatic running of the vehicle 100 by remote control. In the range AR1, the vehicle 100p runs automatically to the transport device 500 by remote control using the vehicle information acquired from the vehicle detector 80p. In the range AR5, the vehicle 100t that has left the transport system 600 runs to the next step, etc., by remote control using the vehicle information acquired from the vehicle detector 80p.

The ranges AR2 to AR4 are transport sections of the vehicle 100 transported by the transport device 500. The range AR2 is an example of the transport starting position where the transport of the vehicle 100 by the transport device 500 is started. In the range AR2, the remote control is stopped and the transport method of the vehicle 100 is switched from self-running conveyance by remote control to the transport by the transport device 500. The vehicle 100p, which runs by remote control, enters the range AR2 by crossing a starting point SP on one end of the transport unit 510. The vehicle 100q that has reached the range AR2 becomes ready to be transported by the transport unit 510.

In the range AR3, the vehicle 100r is transported by the transport device 500 and also undergoes a predetermined process, such as an inspection process. In the present embodiment, the range AR3 is a region outside the detection range of the vehicle 100 by the vehicle detector 80, and automatic running of the vehicle 100r by remote control is not performed in the range AR3. However, the vehicle 100r in the range AR3 may be capable of wireless communication with the remote control system 300, allowing remote control to execute operations other than running of the vehicle 100, for example, turning on or off the power sources of the vehicle 100 or various units. Further, the range AR3 may be set within the detection range of the vehicle detector 80; in this case, automatic running by remote control may be performed also in the range AR3.

The range AR4 is an example of the transport ending position where the transport of the vehicle 100 by the transport device 500 is ended. The vehicle 100 reaches the range AR4 after the process in the range AR3 is completed. In the range AR4, the vehicle 100s can be detected by the vehicle detector 80t, and it is possible to cause the vehicle 100s to run automatically by remote control to make it leave the transport unit 510. In the present embodiment, the range AR4 is set in advance as the range from an ending point EP at the other end of the transport unit 510 to a predetermined distance. This "predetermined distance" is determined, for example, based on the range within which the vehicle detector 80t can detect the vehicle 100t. However, the range AR4 may be any range from the position where the process for the vehicle 100r in the range AR3 is completed to the ending point EP, assuming that the vehicle detector 80t is capable of detecting the vehicle 100t. In this case, the size of the range AR4 may be varied depending on the progress of the process for the vehicle 100 in the range AR3.

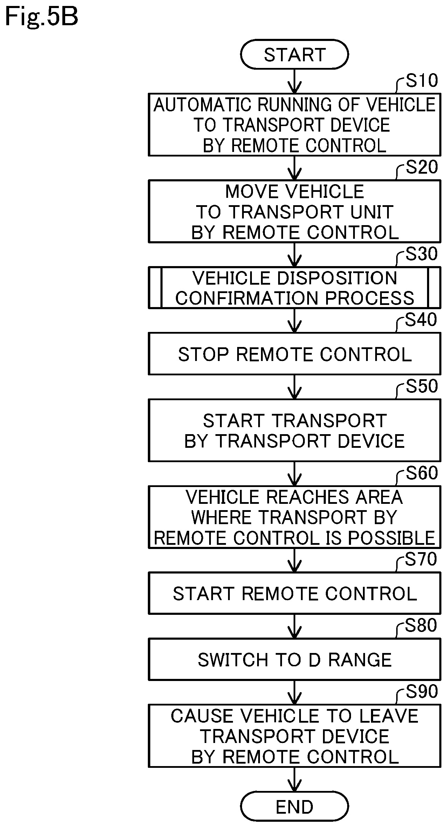

Fig. 5B is a flowchart showing the transport method of the vehicle 100 according to the first embodiment of the present disclosure. This flow is started when the vehicle 100 starts running toward the transport device 500. In the following description, Fig. 1 is referred to as appropriate to facilitate understanding of the technical details.

In the step S10, the remote control unit 312 causes the vehicle 100 to automatically run toward the transport device 500 by remote control. More specifically, as shown in the range AR1 in Fig. 1, the remote control unit 312 generates a control command for enabling remote control using the position and the orientation of the vehicle 100p estimated by the position estimation unit 314, and transmits the command to the vehicle 100p. Before the transport by the transport device 500 is started, the transport control system 400 acquires the vehicle identification information from the vehicle 100p that has arrived at the transport device 500, and confirms whether the acquired vehicle identification information matches the vehicle identification information of the target vehicle for transport in production control. However, the matching may be omitted, and the vehicle information acquisition unit 332 may be omitted if the vehicle identification information is not used.

In the step S20, the remote control unit 312 causes the vehicle 100 to automatically run by remote control to move the vehicle 100 to the transport starting position on the transport unit 510. In the example in Fig. 1, when the vehicle 100p arrives at the transport device 500, the remote control unit 312 causes the vehicle 100p to run beyond the starting point SP of the transport unit 510 and moves the vehicle 100p to the range AR2, by remote control using the vehicle information acquired from the vehicle detector 80p. When the estimation position of the vehicle 100q reaches the transport starting position as in the vehicle 100q in Fig. 1, the remote control determination unit 322 determines to stop the remote control.

In the step S30, a vehicle disposition confirmation process is performed. The "vehicle disposition confirmation process" confirms whether or not the target vehicle 100 for transport departs from the transport unit 510. If it is confirmed that the vehicle 100 is departed from the transport unit 510, a predetermined abnormality countermeasure is performed.

In the step S40, the remote control unit 312 stops the remote control of the vehicle 100. In the present embodiment, the stopping of the remote control of the vehicle 100 is achieved by stopping the generation of control commands by the remote control system 300 or by stopping the transmission of control commands to the vehicle 100. By stopping the remote control of the vehicle 100 during the transport by the transport device 500, the power consumption and processing burden of the remote control system 300 and other devices mounted on the vehicle 100, such as control devices, can be reduced. Further, by stopping the running of the vehicle 100, for example, workers can smoothly perform inspections on the electrical system, engine compartment, and the like, of the vehicle 100 while the vehicle 100 is being transported.

In the step S50, the transport control system 400 controls the electric motor 522 to drive the transport unit 510, thereby starting the transport of the vehicle 100. In the present embodiment, the transport unit 510 is driven continuously, and S50 is performed in parallel with S30, S40, etc. In the step S60, the remote control unit 312 detects that the vehicle 100 has reached an area where the vehicle 100 can be transported by remote control. The fact that the vehicle 100 has reached or not reached the area where the vehicle 100 can be transported by remote control can be detected, for example, by the transport position detector 526 provided in the range AR4 shown in Fig. 1, or according to the position or the like of the vehicle 100 acquired by the vehicle detector 80t.

In the step S70, the remote control unit 312 starts the remote control of the vehicle 100. In the step S80, the remote control unit 312 switches the function of the power transmission unit 162 from a P range to a D range (described later) by remote control, to start the running of the vehicle 100 by remote control. Specifically, the remote control unit 312 sets the power transmission unit 162 in a coupled state, and drives the lock unit 164 to switch the transmission mechanism of the power transmission unit 162 from a fixed state to a non-fixed state, thereby switching the vehicle 100 to be ready for running. As shown in the range AR4 in Fig. 1, the remote control system 300 generates a control command for automatic running of the vehicle 100s using the vehicle information acquired from the vehicle detector 80t, and transmits the control command to the vehicle 100s. In the step S90, the remote control unit 312 causes the vehicle 100s to leave the transport unit 510 by remote control, and ends the flow. The vehicle 100t that has left the transport device 500 is let out to the next step by automatic running.

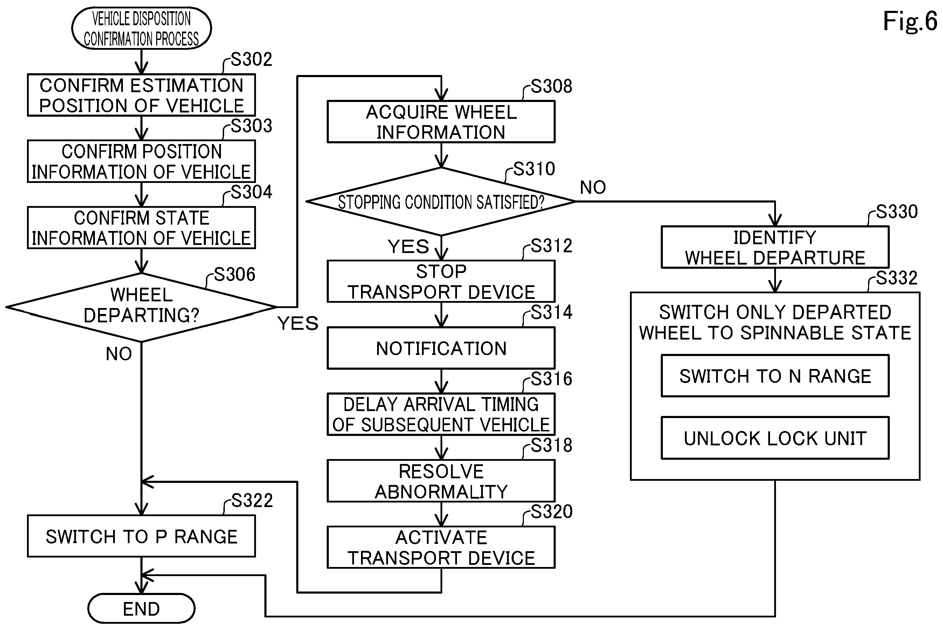

Fig. 6 is a flowchart showing a process routine of the vehicle disposition confirmation process in the transport method according to the first embodiment. In the step S302, the detection unit 316 acquires the estimation position of the vehicle 100 from the position estimation unit 314, and confirms the estimation position VL of the vehicle 100 thus acquired. In the step S303, the detection unit 316 confirms the position information of the vehicle 100. In the present embodiment, the detection unit 316 confirms the detection results of the vehicle 100 by the transport position detector 526 and the off-transport detection unit 528 as the position information of the vehicle 100. In the step S304, the detection unit 316 acquires the state information VI from the vehicle 100, and confirms the state information VI. In the step S306, the detection unit 316 confirms whether or not the wheel 166 is departed from the transport unit 510 using the acquired estimation position VL, position information, and state information VI of the vehicle 100.

If the detection unit 316 determines that no wheel 166 departs from the transport unit 510 (S306: NO), the detection unit 316 forwards the process to the step S322. In the step S322, the remote control unit 312 drives the lock unit 164 of the vehicle 100 by remote control to switch the function of the power transmission unit 162 to the P range. The remote control unit 312 may switch the function of the power transmission unit 162 to the N range instead of switching it to the P range. In this case, it is preferable that the remote control unit 312 securely stops the vehicle 100 by switching the lock unit 164 of the vehicle 100 to a fixed state by remote control or by fixing the wheels 166 on the transport unit 510 with a predetermined fixing tool or the like. As a result, the transmission mechanism of the power transmission unit 162 is fixed to prevent the wheels 166 from rotating, thus making the vehicle 100 incapable of running. The remote control unit 312 switches to the P range, and ends the flow.

If the detection unit 316 determines that the wheel 166 is departed from the transport unit 510 (S306: YES), the detection unit 316 forwards the process to the step S308. In the step S308, the wheel information acquisition unit 320 acquires the wheel information WI. Specifically, the wheel information acquisition unit 320 acquires at least one of information regarding the orientation of the wheel 166 relative to the transport direction DR of the vehicle 100 transported by the transport device 500, information regarding the distance between the wheel 166 that has been departed and the transport unit 510, and information regarding the height difference between the wheel 166 that has been departed and the transport unit 510. The wheel information acquisition unit 320 stores the acquired wheel information WI in the storage 340.

In the step S310, the transport instruction unit 326 confirms the acquired wheel information WI to determine whether or not the stopping condition is satisfied. The "stopping condition" is a condition to determine the degree of abnormality of the wheel 166 departed from the transport unit 510, and is used to determine whether or not the transport device 500 should be stopped. If the wheel information satisfies the stopping condition, the transport instruction unit 326 stops the transport device 500 to suppress or prevent damage to the wheels 166 and the drive system 160 of the vehicle 100. However, even if the stopping condition is satisfied, the stopping condition may be resolved, for example, by the remote control unit 312 performing remote control to resolve the stopping condition before the transport device 500 is stopped.

If the stopping condition is satisfied (S310: YES), the process is shifted to the step S312 and the abnormality countermeasure is executed. The following abnormality countermeasure in the step S312 to the step S316 may be performed in any order or simultaneously. In the step S312, the transport instruction unit 326 outputs, to the transport control system 400, an instruction to stop the transport of the vehicle 100 by the transport device 500, as an example of the abnormality countermeasure. Upon receiving the instruction to stop, the transport control system 400 stops the transport unit 510 by stopping the electric motor 522 or the like. If the abnormality can be resolved quickly, for example, if the vehicle 100 can be immediately moved to the transport unit 510, the transport instruction unit 326 may output an instruction to decrease the transport speed of the vehicle 100 being transported by the transport device 500, instead of stopping the transport device 500.

In the step S314, the notification unit 328 notifies, for example, that the vehicle 100 is departed from the transport unit 510 or that the abnormality countermeasure has been executed. The notification unit 328 provides the notification to, for example, workers who perform work on the vehicle 100 on the transport unit 510, the manager of the step, or the manager of the transport system 600.

In the step S316, the subsequent vehicle instruction unit 330 outputs an instruction to delay the arrival timing of the subsequent vehicle at the transport device 500. The subsequent vehicle instruction unit 330 outputs the instruction to, for example, a step management device for the pre-step, a production management device that supervises each step, a remote control system that causes the subsequent vehicle to run by remote control, and the like. As a result, the timing of arrival of the subsequent vehicle at the transport device 500 is delayed. In this case, the subsequent vehicle instruction unit 330 delays the timing of arrival of the subsequent vehicle, for example, according to the delay time relative to the target production time. By delaying the arrival of the subsequent vehicle based on the target production time, it is possible to prevent the subsequent vehicle from arriving at the transport device 500 before the transport device 500 is restored, thereby suppressing or preventing an increase of in-process products waiting for the transport by the transport device 500, thus suppressing a decrease in production efficiency.

In the step S318, the abnormality is resolved. In the present embodiment, the abnormality is resolved, for example, by moving the vehicle 100 that is departed to the transport starting position CP of the transport unit 510 by manual operation of a worker. The abnormality may be resolved by detaching the vehicle 100 from the transport unit 510. In this case, the flow is ended without shifting to S322.

In the step S320, the transport instruction unit 326 outputs, to the transport control system 400, an instruction to activate the transport device 500 that has been stopped, and forwards the process to the step S322. As a result, the transport of the vehicle 100 by the transport device 500 is started again. If the transport speed of the vehicle 100 has been decreased instead of stopping the transport device 500, the transport instruction unit 326 outputs an instruction to restore the transport speed to the original speed to the transport control system 400. Further, to eliminate the delay in production relative to the target production time, it is also possible to set the transport speed to be faster than the transport speed before the restart. Further, the subsequent vehicle instruction unit 330 switches the running of the delayed subsequent vehicle to normal running.

If the stopping condition is not satisfied (S310: NO), the process shifts to the step S330 to perform preparations for transporting the vehicle 100 in the departed state. In the step S330, the wheel identification unit 318 identifies which of the four wheels 166 has been departed using at least one of the estimation position VL, the position information, and the state information VI. In the step S332, the remote control unit 312 switches only the identified wheel(s) 166 of the vehicle 100 to a state in which the wheel 166 is spinnable with a force smaller than that given to the wheel 166 before it is detected that the wheel 166 has been departed, and ends the flow. As a result, even if the wheel 166 that is departed is transported by the transport device 500 while being in contact with the ground, etc. other than the transport unit 510, the force given to the wheel 166 that is departed from the ground, etc., which is in contact with the wheel 166, can be released by the spinning of the wheel 166, and any damage to the wheel 166 that is departed and the power transmission unit 162, etc., caused by the force from the ground, etc. can be suppressed or prevented.

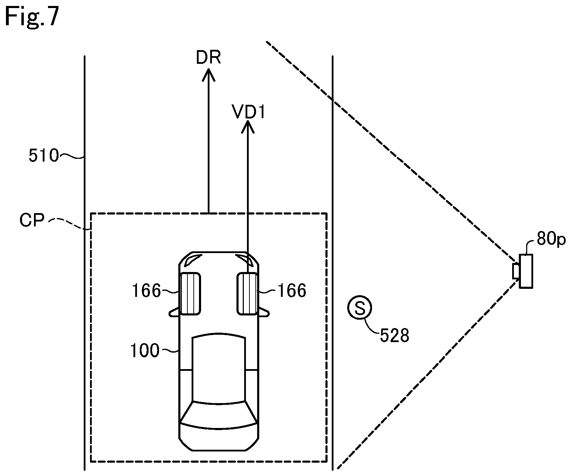

The details of the wheel information and the stopping condition are described below with reference to Fig. 7 to Fig. 10. Fig. 7 to Fig. 10 show upper views of the vehicle 100 in the vicinity of the range AR2 shown in Fig. 1, i.e., in the vicinity of the transport starting position. In each of Fig. 7 to Fig. 10, to facilitate understanding of the technical details, the two front wheels of the vehicle 100 are schematically illustrated together with the vehicle 100. Further, Fig. 7, Fig. 8, and Fig. 10 show the transport direction DR of the vehicle 100 transported by the transport device 500, and orientations VD1, VD2, and VD3 of the two front wheels of the vehicle 100. The orientations VD1, VD2, and VD3 of the two front wheels correspond to the traveling directions of the vehicle 100.

As shown in Fig. 7, Fig. 8, and Fig. 10, in the present embodiment, the transport device 500 further includes the off-transport detection unit 528. The off-transport detection unit 528 is provided around the transport unit 510. The off-transport detection unit 528 is a detector of various kinds capable of detecting the presence or absence of target objects, such as an infrared sensor, an ultrasonic sensor, a millimeter wave radar, or the like, and is capable of detecting a vehicle 100 that has been departed from the transport unit 510. In other words, the off-transport detection unit 528 is capable of detecting the position of the vehicle 100 outside the transport unit 510. The position of the vehicle 100 detected by the off-transport detection unit 528 is an example of the position information. The detection result of the off-transport detection unit 528 is output to the transport control system 400. However, if the wheel 166 that has been departed can be detected by the state information of the vehicle 100, the position of the vehicle 100 detected by the vehicle detector 80, or the estimation position of the vehicle 100 detected by the position estimation unit 314, the off-transport detection unit 528 may be omitted.

Fig. 7 is an explanatory view showing an upper view of the vehicle 100 disposed in a normal transport starting position in the transport unit 510. Fig. 7 schematically shows the transport starting position CP. In the example in Fig. 7, the vehicle 100 is disposed within the transport starting position CP in a state in which the orientation VD1 of the wheel 166 matches the transport direction DR. The transport starting position CP is not limited to only a specific position, but can be set using a predetermined range. The transport starting position CP can be set, for example, using any range included in the transport section of the transport device 500, assuming that the vehicle 100 can be disposed by automatic running by remote control. The expression "the vehicle 100 has arrived at the transport starting position CP" can mean any state as long as the vehicle 100 is ready to be transported by the transport device 500. For example, the entire vehicle 100 may not be included in the transport starting position CP, and a part of the rear side of the vehicle 100 may be deviated from the transport starting position CP. The transport starting position CP may further be set using a wider range than the range above, considering, for example, errors in the stopping position of the vehicle 100 by remote control. However, in view of reduction in size of the transport unit 510, it is preferable that the range of the transport starting position CP be small. Further, the transport starting position CP may be set individually for each individual vehicle corresponding to the vehicle identification information, considering the difference in size of the vehicle body of each vehicle type.

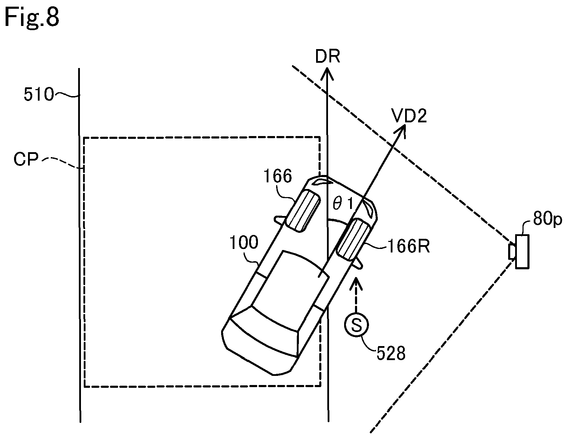

Fig. 8 is an explanatory view showing an upper view of the vehicle 100 departed from the transport unit 510. In the example in Fig. 8, the right front wheel 166R out of the two front wheels of the vehicle 100 departs from the transport unit 510. In this case, the detection unit 316 detects that the front wheel 166R has been departed from the transport unit 510 using at least one of the vehicle information acquired from the vehicle detector 80p, the estimation position of the vehicle 100 estimated by the position estimation unit 314 using the vehicle information, the position of the vehicle 100 detected by the off-transport detection unit 528, and the state information VI of the vehicle 100. The detection unit 316 may perform such detection using the vehicle information acquired from the vehicle detector 80p.

Next, the wheel information acquisition unit 320 acquires the wheel information. In the present embodiment, the wheel information acquisition unit 320 acquires, as the wheel information, an angle θ1 between the transport direction DR of the vehicle 100 transported by the transport device 500 and the orientation VD2 of the wheel 166. The transport instruction unit 326 determines whether or not the acquired angle θ1 satisfies the stopping condition. In the present embodiment, the stopping condition is set using a predetermined threshold, such as 30 or 45 degrees, which can limit damages to the wheel 166 that has been departed due to the transport by the transport device 500. The transport instruction unit 326 determines that the stopping condition is not satisfied if the acquired angle θ1 is equal to or less than the threshold degree, and that the stopping condition is satisfied if the angle θ1 is greater than the threshold.

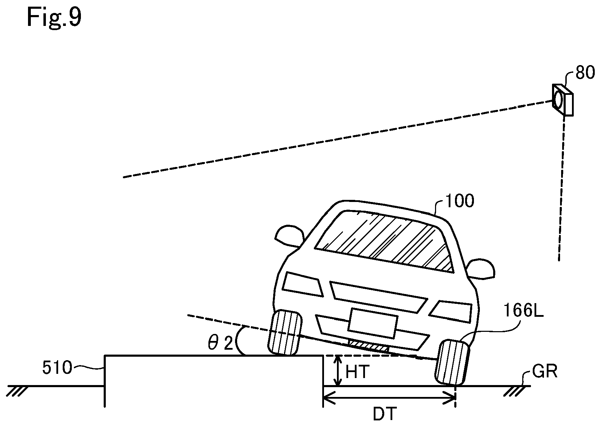

Fig. 9 is an explanatory view showing a front view of the vehicle 100 departed from the transport unit 510. As shown in Fig. 9, when there is a step between the transport unit 510 and a road surface GR other than the transport unit 510, the wheel information acquisition unit 320 can detect the inclination of the vehicle 100 relative to the transport unit 510 or an inclination angle θ2 as the state information, for example, by the acceleration sensor 182. In this case, the transport instruction unit 326 can detect that the vehicle 100 has been departed from the transport unit 510 based on the occurrence of the inclination angle θ2. That is, it is detected that the vehicle 100 has been departed from the transport unit 510 by detecting an inclination that does not occur during the transport by the transport unit 510.

Further, the wheel information acquisition unit 320 may also acquire, as the wheel information, a distance DT to a wheel 166L that has been departed from the transport unit 510. In this case, the transport instruction unit 326 determines whether or not the acquired distance DT satisfies the stopping condition. The stopping condition in this case is set using a threshold value that varies for each vehicle 100, such as, for example, a distance of a half vehicle width of the vehicle 100. However, any fixed value, such as 100 centimeters or 80 centimeters, may be used as the stopping condition. The transport instruction unit 326 determines that the stopping condition is not satisfied if the acquired distance DT is equal to or less than the threshold, and that the stopping condition is satisfied if the distance DT is greater than the threshold.

Further, the wheel information acquisition unit 320 may also acquire, as the wheel information, a height difference HL between the transport unit 510 and the wheel 166L that has been departed. In this case, the transport instruction unit 326 determines whether or not the acquired height difference HL satisfies the stopping condition. In this case, the stopping condition may be a threshold that is set for each vehicle 100, for example, such as a radius of the wheel 166, or may be any fixed value, such as 20 centimeters. It is not necessary to acquire all of these types of information, i.e., the distance DT, the height difference HL, and the inclination angle θ2, instead, any one of them may be acquired, or any combination of them may be acquired.

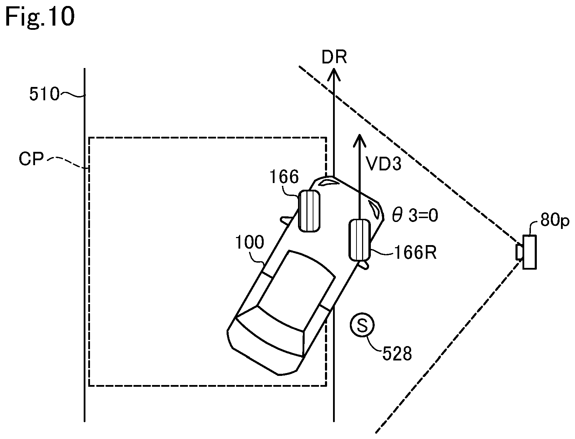

Fig. 10 is an explanatory view showing an upper view of the vehicle 100 in a state where the stopping condition is not satisfied. In Fig. 10, the right front wheel 166R out of the two front wheels of the vehicle 100 departs from the transport unit 510. The wheel information acquisition unit 320 acquires, as the wheel information, an angle θ3 between the transport direction DR of the vehicle 100 transported by the transport device 500 and the orientation VD3 of the front wheel 166R. In the example in Fig. 10, the transport direction DR and the orientation VD3 match substantially, and the angle θ3 is approximately zero. The transport instruction unit 326 determines that the stopping condition is not satisfied because the acquired angle θ3 is not greater than the threshold. In this case, the remote control unit 312 switches the power transmission unit 162 of the vehicle 100 to the N range and also switches the lock unit 164 to the non-fixed state by remote control. As a result, the front wheel 166R that has been departed becomes spinnable with a force smaller than that before the departed state of the front wheel 166R was detected. That is, the front wheel 166R that is departed can rotate even when it is in contact with the ground or the like other than the transport unit 510. Unlike the case where the vehicle 100 is transported while being in the P range, the force applied from the ground or the like to the front wheel 166R that is departed can be used to rotate the wheel 166, thereby suppressing or preventing damages to the wheel 166, the power transmission unit 162, and the like. If, during the transport of the vehicle 100 by the transport device 500, the rotation of the front wheel 166R is regulated by the braking force of the brake unit 170, such as a brake, instead of or together with the control for the drive system 160, such as the power transmission unit 162, the lock unit 164, and the like, the braking force given to the front wheel 166R that is departed may be weakened to be smaller than the braking force having been applied to the front wheel 166R before it departs, thereby allowing the wheel 166 that is departed to be rotatable. The same effect can be achieved also in this case.

As described above, the remote control system 300 of the present embodiment includes the detection unit 316 that detects that the wheel 166 has departed from the transport unit 510 using the position information of the vehicle 100 and the state information VI indicating the state of the vehicle 100 obtained from the sensor group 180 provided in the vehicle 100, and functions as a vehicle detection apparatus. According to the remote control system 300 of the present embodiment, when the vehicle 100 is disposed in the transport unit 510 of the transport device 500 by remote control, it is possible to detect whether or not the wheel 166 departs from the transport unit 510. This enables detection as to whether or not the vehicle 100 is appropriately disposed in the transport unit 510.

According to the remote control system 300 of the present embodiment, when it is detected that the wheel 166 has been departed, the remote control unit 312 functions as a command generation unit that generates a control command to enable switching to the N range in which the wheel 166 that has been departed is rendered spinnable with a force smaller than that before the departed state of the front wheel 166 was detected, and transmits the control command to the vehicle 100. Therefore, unlike the case where the vehicle 100 is transported while being in the P range, damages on the wheel 166 that is departed due to forces given from the ground or the like other than the transport unit 510 can be suppressed or prevented.

According to the remote control system 300 of the present embodiment, the state in which the wheel 166 that is departed is spinnable refers to a state in which the state of the power transmission unit 162 of the vehicle 100 is switched to the N range and the lock unit 164 is switched to the non-fixed state, so that the power from the driving electric motor 168 is not transmitted to the wheel 166 that is departed, thus allowing the wheel 166 that is departed to be spinnable. As a result, the vehicle 100 with the departed wheel 166 can be switched to a transportable state by the simple method of switching the function of the power transmission unit 162 by the remote control unit 312.

The remote control system 300 of the present embodiment includes the wheel identification unit 318 that identifies which of the four wheels 166 has been departed using at least one of the position information of the vehicle 100, the vehicle information, the estimation position VL obtained by using the vehicle information, and the state information VI. When it is detected that the wheel 166 has been departed, the remote control unit 312 generates a control command to enable only the wheel 166 that has been departed to be spinnable, and transmits the control command to the vehicle 100. Since it is possible to enable only the wheel 166 that has been departed to be spinnable, it is possible to suppress or prevent the other wheels 166 on the transport unit 510 from rotating, thereby suppressing or preventing the vehicle 100 from moving on the transport unit 510.

The remote control system 300 of the present embodiment further includes the wheel information acquisition unit 320 that acquires the wheel information WI indicating the state of the wheel 166 that is departed using at least one of the acquired position information, the vehicle information, the estimation position VL acquired using the vehicle information, and the state information VI; and the transport instruction unit 326 that outputs an instruction to stop the transport by the transport device 500 when the state of the wheel 166 that is departed satisfies a predetermined stopping condition. By determining whether or not to transport the vehicle 100 based on the state of the wheels 166, damages to the wheels 166 and the drive system 160 due to the transport by the transport device 500 can be more reliably prevented.

### B. Second Embodiment

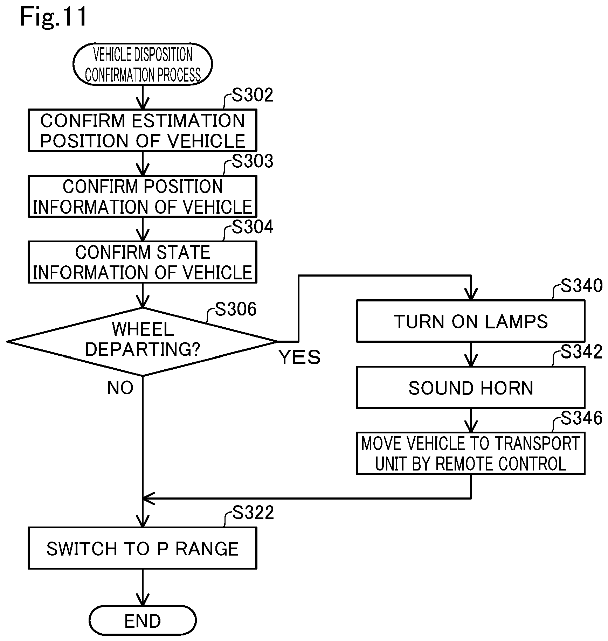

Fig. 11 is a flowchart showing a process routine of a vehicle disposition confirmation process in a transport method according to a second embodiment. The vehicle disposition confirmation process in the second embodiment differs from the vehicle disposition confirmation process in the transport method of the first embodiment shown in Fig. 6 in that the vehicle disposition confirmation process in the second embodiment performs the steps S340 to S346 instead of the steps S308 to S320 and the steps S330 to S332, and otherwise is similar to the first embodiment in its structure. In the present embodiment, when the detection unit 316 detects the wheel 166 that is departed, the occurrence of the abnormality is notified to the surrounding area, and the vehicle 100 is caused to run by remote control to resolve the departed state of the wheel 166.

In the step S340, the remote control unit 312 turns on the lamps 142 of the vehicle 100 by remote control for the notification to the surrounding area of the vehicle 100. In this case, the method of lighting the lamps 142 is preferably a method by which the occurrence of the abnormality can be easily understood in view of prompt notification of the occurrence of the abnormality to workers and the like. Examples of the method include a method of alternately turning on and off the lamps. In the step S342, the remote control unit 312 activates the horn 144 of the vehicle 100 by remote control to give notification to the surrounding area of the vehicle 100. In this case, the method of activating the horn 144 is preferably a method by which the occurrence of the abnormality can be easily understood in view of prompt notification of the occurrence of the abnormality to workers and the like. Examples of the method include a method of generating a sound a predetermined number of times or for an extended period of time.

In the step S346, the remote control unit 312 moves the vehicle 100 to the transport unit 510 by remote control. Specifically, the position estimation unit 314 first acquires the estimation position of the vehicle 100 that is departed from the transport unit 510 using the vehicle information acquired from the vehicle detector 80. The remote control unit 312 causes the vehicle 100 to run to the transport starting position CP of the transport unit 510 by remote control using the acquired estimation position of the vehicle 100. As a result, the departed state of the wheel 166 is resolved, thus enabling the vehicle 100 to be transported by the transport device 500.

As described above, according to the remote control system 300 of the present embodiment, when the wheel 166 that has been departed is detected, the remote control unit 312 generates a control command to move the vehicle 100 to the transport unit 510 by remote control using the position of the vehicle 100 estimated by the position estimation unit 314, and transmits the control command to the vehicle 100. In this way, the vehicle 100 with the wheel 166 departed can be restored to a normal state by remote control. Accordingly, the system can be restored to a normal state more smoothly than manual restoration.

The remote control system 300 of the present embodiment includes the position estimation unit 314 that estimates the position of the vehicle 100 using the vehicle information detected by the vehicle detector 80 that detects 3D point cloud data of the vehicle 100 as the vehicle information. Accordingly, accuracy in the estimation of the position of the vehicle 100 can be improved.

According to the remote control system 300 of the present embodiment, when it is detected that the wheel 166 has been departed, the remote control unit 312 transmits, to the vehicle 100, a control signal to activate at least one of the lamps 142 and the horn 144 provided in the vehicle 100. Therefore, notification to the surrounding area of the vehicle 100 can be made by a simple method using devices provided in the vehicle 100.

### C. Third Embodiment

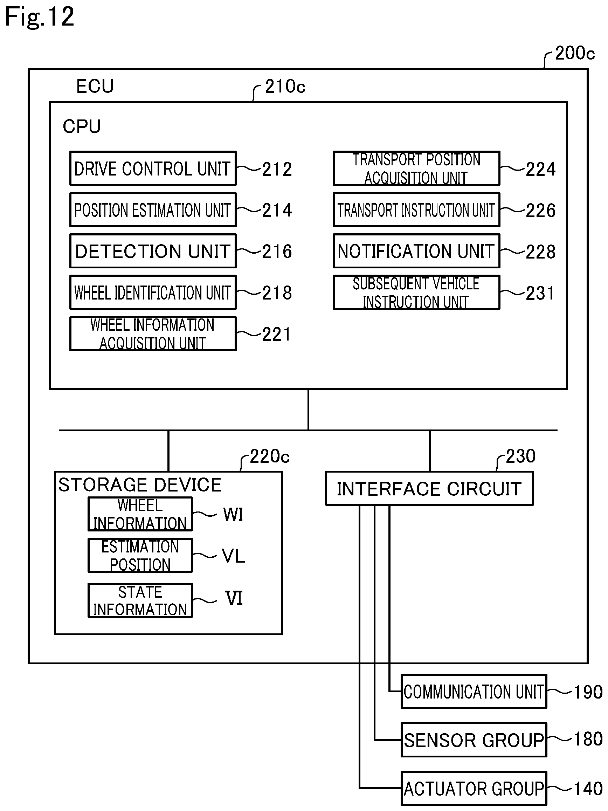

Fig. 12 is a block diagram showing a functional structure of the vehicle 100 according to a third embodiment. The transport system 600 in the present embodiment differs from that in the first embodiment in that the transport system 600 of the present embodiment does not include the remote control system 300. Specifically, the transport system 600 of the present embodiment differs from that of the first embodiment in that the ECU 200c provided in the vehicle 100 functions as a vehicle detection apparatus in place for the remote control system 300. The rest of the structure of the transport system 600 is the same as that in the first embodiment, unless otherwise specified.

As shown in Fig. 12, the ECU 200c differs from the ECU 200 in the first embodiment in that the ECU 200c includes a CPU 210c instead of the CPU 210 and a storage 220c instead of the storage 220. Specifically, in addition to the functions of the CPU 210 shown in the first embodiment, the storage 220c further stores programs to implement the functions corresponding to the position estimation unit 314, the detection unit 316, the wheel identification unit 318, the wheel information acquisition unit 320, the transport position acquisition unit 324, the transport instruction unit 326, the notification unit 328, and the subsequent vehicle instruction unit 330 of the remote control system 300. This enables the CPU 210c to further function as the position estimation unit 214, the detection unit 216, the wheel identification unit 218, the wheel information acquisition unit 221, the transport position acquisition unit 224, the transport instruction unit 226, the notification unit 228, and the subsequent vehicle instruction unit 231 corresponding to these functions. Further, in addition to the state information VI stored in the storage 220 shown in the first embodiment, the storage 220c also stores the wheel information WI and the estimation position VL stored in the remote control system 300. In the present embodiment, the detection unit 216 of the vehicle 100 functions as a command generation unit that, upon detecting the wheel 166 that has been departed from the transport unit 510, generates a control command to enable the wheel 166 that has been departed to be spinnable, and outputs the control command to the drive control unit 212. Upon receiving the input, the drive control unit 212 switches the wheel 166 that is departed to a state where the wheel 166 is spinnable with a force smaller than that given to the wheel 166 before the departed state of the wheel 166 was detected. According to the vehicle 100 configured in this way, since the vehicle 100 includes the vehicle detection apparatus, the same effect as in the first embodiment can be obtained without using a device separate from the vehicle 100, such as the remote control system 300.

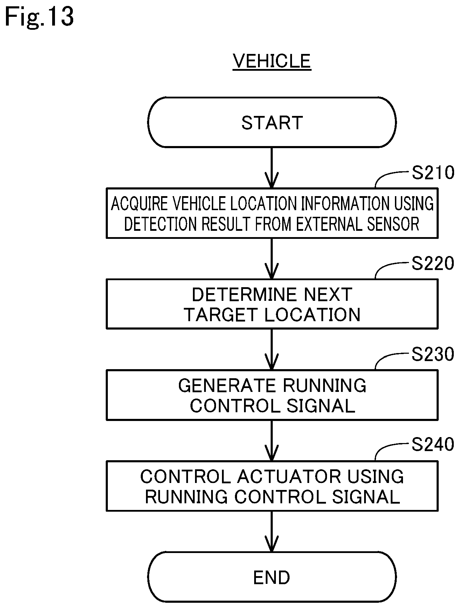

Fig. 13 is a flowchart showing a running method of the vehicle 100 of the present embodiment. The position estimation unit 214 acquires the position and the orientation of the vehicle 100 using the vehicle information output from the vehicle detector 80 (step S210). The drive control unit 212 determines the target location to which the vehicle 100 is supposed to go next (step S220). In the present embodiment, the reference route is stored in advance in the storage 220c of the ECU 200c. The drive control unit 212 generates a running control signal to cause the vehicle 100 to run toward the determined target location (step S230). The drive control unit 212 controls the actuator group 140 using the generated running control signal, thereby causing the vehicle 100 to run at the acceleration and the steering angle indicated by the running control signal (step S240). The drive control unit 212 repeats the acquisition of the position and the orientation of the vehicle 100, the determination of the target location, the generation of the running control signal, and the control of the actuator group 140, in a predetermined cycle. According to the vehicle 100 of the present embodiment, it is possible to cause the vehicle 100 to run by autonomous control without remote control of the vehicle 100 by the remote control system 300.

### D. Alternative Embodiments

(D1) The embodiments described above show an example in which, when it is detected that the wheel 166 has been departed, the remote control unit 312 generates a control command to enable the wheel 166 that has been departed to be rotatable, and transmits the control command to the vehicle 100. Optionally, as in the second embodiment described above, if the vehicle 100 with the wheel 166 departed is not transported by the transport device 500, there is no need to generate the control command to enable the wheel 166 to be rotatable. Further, in this case, the wheel identification unit 318 may be omitted.

(D2) The embodiments described above show examples in which the position estimation unit 314 and the position estimation unit 214 are provided. Optionally, the position estimation unit 314 and the position estimation unit 214 may be omitted when, for example, highly accurate position information is not required for automatic running of the vehicle 100. In this case, for example, the detection results of a sensor capable of detecting the vehicle 100, such as the transport position detector 526 provided in the transport device 500, can be used.

(D3) The embodiments described above show an example in which the vehicle detector 80 is a LiDAR. Optionally, an external camera provided at a different location than the vehicle 100 can be used as the vehicle detector 80 instead of or together with the LiDAR. In this case, the vehicle detector 80 acquires images of the vehicle 100 as the vehicle information. The position estimation unit 314 can estimate the position of the vehicle 100 and the orientation of the vehicle 100 using captured images acquired by the external camera. The position of the vehicle 100 can be acquired, for example, by calculating the coordinates of the positioning point of the vehicle 100 in the local coordinate system using the outer shape of the vehicle 100 detected from the captured image, and converting the calculated coordinates to coordinates in the global coordinate system. The orientation of the vehicle 100 can be estimated based on the orientation of the motion vector of the vehicle 100 calculated from the positional changes of the feature points of the vehicle 100 between frames of the captured images using, for example, the optical flow method. The orientation of the vehicle 100 may also be calculated, for example, using the results of output of a yaw rate sensor or the like mounted on the vehicle 100.

The outer shape of the vehicle 100 in the captured image can be detected, for example, by inputting the captured image into a detection model that utilizes artificial intelligence. Examples of the detection models include a trained machine learning model that has been trained to implement either semantic segmentation or instance segmentation. This machine learning model may be, for example, a convolutional neural network (hereinafter referred to as CNN) trained by supervised learning using a training data set. The training data set includes, for example, a plurality of training images with the vehicle 100, and correct answer labels that indicate whether each region in the training image is a region showing the vehicle 100 or a region showing something other than the vehicle 100. Upon the training of the CNN, the CNN parameters are preferably updated by back-propagation (error back-propagation) to reduce the error between the output result of the detection model and the correct answer label.

(D4) The embodiments described above show an example in which the vehicle 100 is a passenger car, truck, bus, construction vehicle, or the like. However, the vehicle 100 is not limited to the vehicles of these types, and may be a variety of moving objects. In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a two-wheel vehicle, a four-wheel vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

(D5) It is sufficient that the vehicle 100 is configured to be movable by unmanned driving. For example, the vehicle 100 may be in the form of a platform with the structure described below. Specifically, it is sufficient that the vehicle 100 is equipped with a structure that enables the functions of "running," "turning," and "stopping" by unmanned driving. That is, "the vehicle 100 movable by unmanned driving" may not be equipped with at least some of the interior components such as a driver's seat and dashboard, at least some of the exterior components such as bumpers and fenders, or a body shell. In this case, the remaining parts such as the body shell may be installed in the vehicle 100 before the vehicle 100 is shipped from the factory, or the remaining parts such as the body shell may be installed in the vehicle 100 after the vehicle 100 in which the remaining parts such as the body shell are not installed is shipped from the factory. These parts may be installed in the vehicle 100 from any direction, such as the top, bottom, front, rear, right or left side of the vehicle 100, and may be installed from the same direction or from different directions. The position determination can be made also for the form of the platform in the same manner as for the vehicle 100 in the first embodiment.

(D6) The vehicle 100 may be manufactured by any production method. For example, the vehicle 100 may be manufactured by combining a plurality of modules. The "module" refers to a unit composed of a plurality of parts that are grouped together according to the site or function of the vehicle 100. For example, the platform of the vehicle 100 may be manufactured by combining a front module constituting the front of the platform, a center module constituting the center of the platform, and a rear module constituting the rear of the platform. The number of the modules constituting the platform is not limited to three, and may be two or less or four or more. Further, in addition to the parts constituting the platform, or instead of the parts constituting the platform, parts constituting a part of the vehicle 100 other than the platform may be modularized. Further, these various modules may also include any exterior components such as bumpers and grilles, and any interior components such as seats and consoles. Further, in addition to the vehicle 100, any form of moving object may be manufactured by combining a plurality of modules. Such modules may be manufactured, for example, by joining a plurality of parts by welding or using fixtures and the like, or by integrally molding at least some of the parts that constitute the module into a single part by casting. The molding method that integrally forms a single part, in particular, a relatively large part, is also called Giga-casting or Mega-casting. For example, the front module, the center module, and the rear module described above may be manufactured through Giga-casting.

(D7) Some or all of the functions of the conveyor control unit 412 and the transport position acquisition unit 414 implemented by the transport control system 400 shown in the embodiments described above may be implemented by the remote control system 300. In other words, the transport system 600 may be configured by the remote control system 300 alone.

(D8) The first embodiment described above shows an example in which the remote control system 300 performs the process from the acquisition of the position and the orientation of the vehicle 100 to the generation of the running control signals. Optionally, the vehicle 100 may perform at least a part of the process from the acquisition of the position and orientation of the vehicle 100 to the generation of the running control signals. For example, the embodiments (1) to (3) below may be applied.
(1) The remote control system 300 may acquire the position and the orientation of the vehicle 100, determine the target location to which the vehicle 100 is supposed to go next, and generate a route from the current location of the vehicle 100 shown by the acquired position to the target location. The remote control system 300 may generate a route to a target location between the current location and the destination, or may generate a route to the destination. The remote control system 300 may transmit the generated route to the vehicle 100. The vehicle 100 may generate a running control signal so that the vehicle 100 runs on the route received from the remote control system 300 and control the actuator group 140 using the generated running control signal.
(2) The remote control system 300 may acquire the position and the orientation of the vehicle 100 and transmit the acquired position and orientation to the vehicle 100. The vehicle 100 may determine the target location to which the vehicle 100 is supposed to go next, generate a route from the current location of the vehicle 100 shown by the received position to the target location, generate a running control signal so that the vehicle 100 runs on the generated route, and control the actuator group 140 using the generated running control signal.
(3) In the embodiments (1) and (2) above, the vehicle 100 may be equipped with an internal sensor, and detection results output from the internal sensor may be used for at least one of the generation of the route and the generation of the running control signal. Examples of the internal sensor may include, for example, camera, LiDAR, millimeter wave radar, ultrasonic sensor, GPS sensor, acceleration sensor, gyro sensor, and the like. For example, in the embodiment (1) described above, the remote control system 300 may acquire the detection result of the internal sensor, and reflect the detection result of the internal sensor to the route when the route is generated. In the embodiment (1) described above, the vehicle 100 may acquire the detection result of the internal sensor, and reflect the detection result of the internal sensor to the running control signal when the running control signal is generated. In the embodiment (2) described above, the vehicle 100 may acquire the detection result of the internal sensor, and reflect the detection result of the internal sensor to the route when the route is generated. In the embodiment (2) described above, the vehicle 100 may acquire the detection result of the internal sensor, and reflect the detection result of the internal sensor to the running control signal when the running control signal is generated.

(D9) In the third embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D10) In the second embodiment, the vehicle 100 acquires vehicle position and vehicle orientation using detection result from the vehicle sensor 80. By contrast, the vehicle 100 may be equipped with an internal sensor, the vehicle 100 may acquire vehicle position and vehicle orientation using detection result from the internal sensor, determine a target location to which the vehicle 100 is to move next, generate a route from a current location of the vehicle 100 indicated by the acquired vehicle position and vehicle orientation to the target location, generate a running control signal for running along the generated route, and control the actuator grope 140 of the vehicle 100 using the generated running control signal. In this case, the vehicle 100 is capable of running without using any detection result from the vehicle detector 80. The vehicle 100 may acquire target arrival time or traffic congestion information from outside the vehicle 100 and reflect the target arrival time or traffic congestion information in at least one of the routes and the running control signal. The functional configuration of the transport system 600 or transport unit 510 may be entirely provided at the vehicle 100. Specifically, the processes realized by the transport system 600 or remote control system 300 in the present disclosure may be realized by the vehicle 100 alone.

(D11) In the above-described first embodiment, the remote control system 300 automatically generates a running control signal to be transmitted to the vehicle 100. By contrast, the remote control system 300 may generate a running control signal to be transmitted to the vehicle 100 in response to operation by an external operator existing outside the vehicle 100. For example, the external operator may operate an operating device including a display on which a captured image output from the vehicle detector 80 is displayed, steering, an accelerator pedal, and a brake pedal for operating the vehicle 100 remotely, and a communication device for making communication with the remote control system 300 through wire communication or wireless communication, for example, and the remote control system 300 may generate a running control signal responsive to the operation on the operating device.

(D12) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

## Claims

1. A vehicle detection apparatus (300), comprising:
a detection unit (316) configured to detect, using at least one of state information indicating a state of a vehicle (100) capable of running by unmanned driving obtained from a detector (180) provided on the vehicle, an image of the vehicle, three-dimensional (3D) point cloud data of the vehicle, and position information of the vehicle, that at least one wheel (166) provided in the vehicle departs from a transport unit (510) of a transport device (510), and output a detection result, the transport unit being capable of transporting the vehicle
a command generation unit (312, 212) configured to generate, when departure of the wheel is detected, a control command to cause the departed wheel to be spinnable with a force smaller than a force before the departure of the wheel is detected, and output the control command, **characterised in that** the vehicle detection apparatus further comprises:
a wheel identification unit (318) configured to identify which wheel is departed using the at least one information,
wherein, when departure of the wheel is detected, the command generation unit generates and outputs a control command to cause only the departed wheel to be spinnable.

2. The vehicle detection apparatus according to claim 1, wherein the state in which the departed wheel is spinnable includes at least one of a state in which the departed wheel is spinnable because power from a motor of the vehicle is not transmitted to the departed wheel, and a state in which the departed wheel is spinnable because a braking force applied to the departed wheel is weakened to be smaller than a braking force applied to the wheel before the wheel is departed.

3. The vehicle detection apparatus according to claim 1, further comprising:
a position estimation unit (314) configured to estimate a position of the vehicle using vehicle information, the vehicle information being at least one of the image of the vehicle and the 3D point cloud data of the vehicle and acquired by a vehicle detector that acquires the vehicle information.

4. The vehicle detection apparatus according to claim 3, further comprising:
a command generation unit (312, 212) configured to generate and output a control command to move the vehicle to the transport unit using the position of the vehicle estimated by the position estimation unit when departure of the wheel is detected.

5. The vehicle detection apparatus according to claim 1, further comprising:
a wheel information acquisition unit (320) configured to acquire wheel information indicating a state of the departed wheel using the acquired at least one information; and
a transport instruction unit (326) configured to output an instruction to stop transport by the transport device when the acquired state of the departed wheel satisfies a predetermined stopping condition.

6. The vehicle detection apparatus according to claim 5, wherein the wheel information includes at least one of information regarding an orientation of the departed wheel with respect to a transport direction in which the transport device transports the vehicle, information regarding a distance from the transport unit to the departed wheel, and information regarding a height difference between the transport unit and the departed wheel .

7. The vehicle detection apparatus according to claim 1, further comprising:
a command generation unit (312, 212) configured to generate and output a control signal to activate at least one of a lamp or a horn (144) provided in the vehicle when departure of the wheel is detected.

8. A vehicle (100) capable of running by unmanned driving, comprising:
at least one wheel (166); and
a vehicle detection apparatus (300) according to any one of claims 1 to 7.

9. A vehicle detection method, comprising:
acquiring at least one of state information indicating a state of a vehicle (100) capable of running by unmanned driving obtained from a detector (180) provided on the vehicle, an image of the vehicle, 3D point cloud data of the vehicle, and position information of the vehicle;
detecting, using the acquired at least one information, that at least one wheel (166) provided in the vehicle departs from a transport unit (510) of a transport device (500), and outputting a detection result, the transport unit being capable of transporting the vehicle, **characterised in that** the method further comprises:
identifying which wheel is departed using the at least one information; and
when departure of the wheel is detected, generating and outputting a control command to cause the departed wheel to be spinnable with a force smaller than a force before the departure of the wheel is detected and generating and outputting a control command to cause only the departed wheel to be spinnable.

## Patentansprüche

1. Fahrzeugerkennungsvorrichtung (300), umfassend:
eine Erkennungseinheit (316), die konfiguriert ist zum Erkennen unter Verwendung von zumindest einem der folgenden Elemente: Zustandsinformationen, die einen Zustand eines zum unbemannten Fahren fähigen Fahrzeugs (100) angeben und von einem am Fahrzeug vorgesehenen Sensor (180) erhalten werden, einem Bild des Fahrzeugs, dreidimensionalen (3D) Punktwolkendaten des Fahrzeugs sowie Positionsinformationen des Fahrzeugs, dass zumindest ein am Fahrzeug vorgesehenes Rad (166) von einer Transporteinheit (510) einer Transportvorrichtung (510) abweicht, und zum Ausgeben eines Erkennungsergebnisses, wobei die Transporteinheit in der Lage ist, das Fahrzeug zu transportieren,
eine Befehlserzeugungseinheit (312, 212), die so konfiguriert ist, dass sie, wenn ein Abweichen des Rades erkannt wird, einen Steuerbefehl erzeugt, um zu bewirken, dass das abgewichene Rad mit einer Kraft drehbar ist, die kleiner ist als eine Kraft vor dem Erkennen des Abweichens des Rades, und den Steuerbefehl ausgibt, **dadurch gekennzeichnet, dass** die Fahrzeugerkennungsvorrichtung ferner Folgendes umfasst:
eine Radidentifizierungseinheit (318), die so konfiguriert ist, dass sie unter Verwendung der zumindest einen Information identifiziert, welches Rad abgewichen ist,
wobei die Befehlserzeugungseinheit beim Erkennen des Abweichens des Rades einen Steuerbefehl erzeugt und ausgibt, um zu bewirken, dass nur das abgewichene Rad drehbar ist.

2. Fahrzeugerkennungsvorrichtung nach Anspruch 1, wobei der Zustand, in dem das abgewichene Rad drehbar ist, zumindest einen der folgenden Zustände umfasst: einen Zustand, in dem das abgewichene Rad drehbar ist, weil die Kraft von einem Motor des Fahrzeugs nicht auf das abgewichene Rad übertragen wird, und einen Zustand, in dem das abgewichene Rad drehbar ist, weil eine auf das abgewichene Rad ausgeübte Bremskraft abgeschwächt wird, so dass sie kleiner ist als eine auf das Rad ausgeübte Bremskraft vor dem Abweichen des Rades.

3. Fahrzeugerkennungsvorrichtung nach Anspruch 1, ferner umfassend:
eine Positionsschätzeinheit (314), die so konfiguriert ist, dass sie eine Position des Fahrzeugs unter Verwendung von Fahrzeuginformationen schätzt, wobei die Fahrzeuginformationen zumindest eines der folgenden Elemente umfassen: das Bild des Fahrzeugs und die 3D-Punktwolkendaten des Fahrzeugs, und von einem Fahrzeugdetektor erfasst werden, der die Fahrzeuginformationen erfasst.

4. Fahrzeugerkennungsvorrichtung nach Anspruch 3, ferner umfassend:
eine Befehlserzeugungseinheit (312, 212), die so konfiguriert ist, dass sie einen Steuerbefehl erzeugt und ausgibt, um das Fahrzeug unter Verwendung der von der Positionsschätzeinheit geschätzten Position des Fahrzeugs zu der Transporteinheit zu bewegen, wenn ein Abweichen des Rades erkannt wird.

5. Fahrzeugerkennungsvorrichtung nach Anspruch 1, ferner umfassend:
eine Radinformationserfassungseinheit (320), die so konfiguriert ist, dass sie unter Verwendung der erfassten zumindest einen Information Radinformationen erfasst, die einen Zustand des abgewichenen Rades angeben; und
eine Transportanweisungseinheit (326), die so konfiguriert ist, dass sie eine Anweisung ausgibt, den Transport durch die Transportvorrichtung anzuhalten, wenn der erfasste Zustand des abgewichenen Rades eine vorbestimmte Anhaltebedingung erfüllt.

6. Fahrzeugerkennungsvorrichtung nach Anspruch 5, wobei die Radinformationen zumindest eine der folgenden Informationen umfassen: Informationen bezüglich einer Ausrichtung des abgewichenen Rades in Bezug auf eine Transportrichtung, in der die Transportvorrichtung das Fahrzeug transportiert, Informationen bezüglich eines Abstands von der Transporteinheit zu dem abgewichenen Rad und Informationen bezüglich eines Höhenunterschieds zwischen der Transporteinheit und dem abgewichenen Rad.

7. Fahrzeugerkennungsvorrichtung nach Anspruch 1, ferner umfassend:
eine Befehlserzeugungseinheit (312, 212), die so konfiguriert ist, dass sie ein Steuersignal erzeugt und ausgibt, um zumindest eines von einer Lampe oder einer Hupe (144) zu aktivieren, die in dem Fahrzeug vorgesehen sind, wenn ein Abweichen des Rades erkannt wird.

8. Fahrzeug (100), das fähig ist, im unbemannten Fahrbetrieb zu fahren, umfassend:
zumindest ein Rad (166); und
eine Fahrzeugerkennungsvorrichtung (300) nach einem der Ansprüche 1 bis 7.

9. Fahrzeugerkennungsverfahren, umfassend:
Erfassen von zumindest einem der folgenden Elemente: Zustandsinformationen, die einen Zustand eines zum unbemannten Fahren fähigen Fahrzeugs (100) angeben und von einem am Fahrzeug vorgesehenen Detektor (180) erhalten werden, einem Bild des Fahrzeugs, 3D-Punktwolkendaten des Fahrzeugs und Positionsinformationen des Fahrzeugs;
Erkennen unter Verwendung der erfassten zumindest einen Information, dass zumindest ein am Fahrzeug vorgesehenes Rad (166) von einer Transporteinheit (510) einer Transportvorrichtung (500) abweicht, und Ausgeben eines Erkennungsergebnisses, wobei die Transporteinheit in der Lage ist, das Fahrzeug zu transportieren, **dadurch gekennzeichnet, dass** das Verfahren ferner Folgendes umfasst:
Identifizieren, welches Rad abgewichen ist, unter Verwendung der zumindest einen Information; und
wenn das Abweichen des Rades erkannt wird, Erzeugen und Ausgeben eines Steuerbefehls, um zu bewirken, dass das abgewichene Rad mit einer Kraft drehbar ist, die kleiner ist als eine Kraft vor dem Erkennen des Abweichens des Rades, sowie Erzeugen und Ausgeben eines Steuerbefehls, um zu bewirken, dass nur das abgewichene Rad drehbar ist.

## Revendications

1. Appareil de détection de véhicule (300), comprenant :
une unité de détection (316) conçue pour détecter, à l'aide d'au moins une information parmi une information d'état indiquant un état d'un véhicule (100) capable de se déplacer en conduite autonome obtenue à partir d'un détecteur (180) prévu sur le véhicule, une image du véhicule, des données de nuage de points tridimensionnelles (3D) du véhicule et une information de position du véhicule, qu'au moins une roue (166) prévue sur le véhicule s'éloigne d'une unité de transport (510) d'un dispositif de transport (500) et pour émettre un résultat de détection, l'unité de transport étant capable de transporter le véhicule,
une unité de génération de commande (312, 212) conçue pour générer, lorsque l'éloignement de la roue est détecté, une commande visant à amener la roue qui s'est éloignée à pouvoir tourner avec une force inférieure à une force précédant la détection de l'éloignement de la roue et pour émettre ladite commande ; **caractérisé en ce que** l'appareil de détection de véhicule comprend en outre :
une unité d'identification de roue (318) conçue pour identifier quelle roue s'est éloignée à l'aide de ladite au moins une information,
étant entendu que, lorsque l'éloignement de la roue est détecté, l'unité de génération de commande génère et émet une commande visant à amener uniquement la roue qui s'est éloignée à pouvoir tourner.

2. Appareil de détection de véhicule selon la revendication 1, dans lequel l'état dans lequel la roue qui s'est éloignée peut tourner comprend un état dans lequel la roue qui s'est éloignée peut tourner parce que la puissance provenant d'un moteur du véhicule n'est pas transmise à la roue qui s'est éloignée et/ou un état dans lequel la roue qui s'est éloignée peut tourner parce qu'une force de freinage appliquée à la roue qui s'est éloignée est réduite pour être inférieure à une force de freinage appliquée à la roue avant son éloignement.

3. Appareil de détection de véhicule selon la revendication 1, comprenant en outre :
une unité d'estimation de position (314) conçue pour estimer la position du véhicule à l'aide d'informations de véhicule, les informations de véhicule consistant en au moins une information parmi l'image du véhicule et les données de nuage de points 3D du véhicule et étant acquises par un détecteur de véhicule qui acquiert les informations de véhicule.

4. Appareil de détection de véhicule selon la revendication 3, comprenant en outre :
une unité de génération de commande (312, 212) conçue pour générer et émettre une commande visant à déplacer le véhicule vers l'unité de transport à l'aide de la position du véhicule estimée par l'unité d'estimation de position lorsque l'éloignement de la roue est détecté.

5. Appareil de détection de véhicule selon la revendication 1, comprenant en outre :
une unité d'acquisition d'informations de roue (320) conçue pour acquérir des informations de roue indiquant un état de la roue qui s'est éloignée à l'aide de ladite au moins une information acquise, et
une unité d'instruction de transport (326) conçue pour émettre une instruction visant à arrêter le transport effectué par le dispositif de transport lorsque l'état acquis de la roue qui s'est éloignée satisfait une condition d'arrêt prédéterminée.

6. Appareil de détection de véhicule selon la revendication 5, dans lequel les informations de roue comprennent au moins une information parmi une information relative à l'orientation de la roue qui s'est éloignée par rapport au sens de transport dans lequel le dispositif de transport transporte le véhicule, une information relative à la distance séparant l'unité de transport de ladite roue qui s'est éloignée et/ou une information relative à la différence de hauteur entre l'unité de transport et la roue qui s'est éloignée.

7. Appareil de détection de véhicule selon la revendication 1, comprenant en outre :
une unité de génération de commande (312, 212) conçue pour générer et émettre un signal de commande pour activer une lampe et/ou un avertisseur (144) prévus sur le véhicule lorsque l'éloignement de la roue est détecté.

8. Véhicule (100) capable de se déplacer en conduite autonome, comprenant :
au moins une roue (166), et
un appareil de détection de véhicule (300) selon l'une quelconque des revendications 1 à 7.

9. Procédé de détection de véhicule, comprenant :
l'acquisition d'au moins une information parmi une information indiquant un état du véhicule (100) capable de se déplacer en conduite autonome obtenue à partir d'un détecteur (180) prévu sur le véhicule, une image du véhicule, des données de nuage de points 3D du véhicule et une information de position du véhicule,
la détection, à l'aide de ladite au moins une information acquise, qu'au moins une roue (166) prévue sur le véhicule s'éloigne d'une unité de transport (510) d'un dispositif de transport (500) et pour émettre un résultat de détection, l'unité de transport étant capable de transporter le véhicule ; **caractérisé en ce que** le procédé comprend en outre :
l'identification de la roue qui s'est éloignée à l'aide de ladite au moins une information,
lorsque l'éloignement de la roue est détecté, la génération et l'émission d'une commande visant à amener la roue qui s'est éloignée à pouvoir tourner avec une force inférieure à une force précédant la détection de l'éloignement de la roue, et la génération et l'émission d'une commande visant à amener uniquement la roue qui s'est éloignée à pouvoir tourner.
